# EUROPEAN PATENT SPECIFICATION

(11) **EP 3 307 077 B1**
(45) Date of publication and mention of the grant of the patent: **04.03.2020**
(21) Application number: 16730041.7
(22) Date of filing: 09.06.2016
(51) Int. Cl.: A23G 1/36, A23G 1/38, A23G 1/46

(54) **HEAT STABLE CHOCOLATE AND METHOD OF PRODUCING SUCH**
HITZESTABILE SCHOKOLADE UND VERFAHREN ZUR HERSTELLUNG DAVON
CHOCOLAT STABLE À LA CHALEUR ET PROCÉDÉ POUR SA PRODUCTION

(30) Priority: 10.06.2015 SE 1550780
(43) Date of publication of application: 18.04.2018
(73) Proprietor: AAK AB (Publ), 215 32 Malmö (SE)
(72) Inventor: ANDERSEN, Morten Daugaard, 8270 Højbjerg (DK)
(74) Representative: Patentgruppen A/S
(86) International application number: PCT/SE2016/050551
(87) International publication number: WO 2016/200323

(56) References cited:
- EP-A1- 0 276 548
- EP-A1- 2 868 204
- WO-A1-2015/098932
- JP-A- 2008 206 490
- US-A1- 2009 074 937
- HACHIYA I ET AL: "SEEDING EFFECTS ON SOLIDIFICATION BEHAVIOR OF COCOA BUTTER AND DARK CHOCOLATE. II. PHYSICAL PROPERTIES OF DARK CHOCOLATE", JOURNAL OF THE AMERICAN OIL CHEMISTS' SOCIETY (JAOCS), SPRINGER, DE, vol. 66, no. 12, 1 December 1989 (1989-12-01), pages 1763-1770, XP002037818, ISSN: 0003-021X, DOI: 10.1007/BF02660744

## Description

### Technical field

The present invention relates the field of chocolate. Particularly, it relates to a heat stable chocolate, a method of producing a heat stable chocolate, and use of a heat stable chocolate.

### Background

Chocolate is throughout the world regarded as being one of the finest types of confectionary and various types and shapes of chocolate confectionary have been developed over the years. The innovation within the field of chocolate has been much focused on sensory aspects, such as taste, and mouth feel. However, also the visual appearance is an important aspect in the consumer's overall perception of the quality of a chocolate confectionary. Accordingly, the visual appearance of a chocolate confectionary plays a key role for the chocolate manufacturer because a less attractive appearance of the confectionary will easily be judged by the consumer to relate to a confectionary of inferior quality.

An important problem relating to the visual appearance of a chocolate confectionary is the bloom effect which may be easily recognisable on the surface of the chocolate. In case blooming has occurred, the surface of the chocolate confectionary will have a rather dull appearance having less gloss and often having clearly visible bloom crystals on the surface. The appearance of bloom, if any, typically takes place after weeks or months of storage.

Especially storage at high temperatures in warmer regions may be problematic with respect to the stability of the chocolate product.

Chocolate generally comprises cocoa butter, cocoa solids and sugar. Milk fat and other ingredients may be present in chocolate compositions as well.

In the manufacturing process of chocolate, the ingredients are mixed. The mixture is subjected to a tempering process in a tempering apparatus in which the chocolate is subjected to a carefully pre-programmed temperature profile. Subsequently, the chocolate is used for making the chocolate confectionary and the resulting confectionary is cooled following a predetermined cooling program.

The tempering process serves the purpose of making a sufficient amount of a desired type of seed crystals, which in turn is responsible for obtaining a rather stable chocolate product less prone to changes in the crystal composition of the solid fats. Bloom in chocolate is a well-studied phenomenon and among chocolate manufactures it is agreed that the bloom effect somehow is related to solid fat crystal transformations that may take place in the chocolate.

In the prior art various ways of diminishing the bloom effect in chocolates have been suggested.

Sato et al., JAOCS, Vol. 66, no.12, 1989, describe the use of crystalline seed to accelerate the crystallization going on in cocoa butter and dark chocolate upon solidification.

JP 2008206490 discloses a tempering promoter in the form of SUS-type triglycerides, where S is a saturated fatty acid having 20 or more carbon atoms and U is an unsaturated fatty acid such as oleic acid.

EP 0 294 974 A2 describes a powdery tempering accelerator also based on SUS-type triglycerides having a total number of carbon atoms of the constituent fatty acid residues of between 50 and 56. The tempering accelerator is added, for example, as dispersion in a dispersion medium, as a seed for desired crystal formation to the chocolate during the production.

EP 2 868 204 A1 relates to a method for producing a chocolate comprising an addition step for adding a seeding agent containing at least beta-StOSt crystal to chocolate mix in a melted state.

EP 0 276 548 A1 relates to a chocolate additive comprising powder particles having as the main component a 2-unsaturated -1 ,3-disaturated glyceride the constituent fatty acids of which are unsaturated fatty acids having at least 18 carbon atoms and saturated fatty acids having 20 to 24 carbon atoms.

US 2009/074937 A1 relates to chocolate compositions where the fat phase comprises at least cocoa butter and optionally milk fat and/or a cocoa butter equivalent, where early-crystallizing cocoa butter is used.

EP 1 485 127 is prior art under Article 54(3) EPC. This document relates to a method for suppressing an increase in the viscosity of a water-containing heat-resistant chocolate mix, said water-containing heat-resistant chocolate mix being in a molten liquid state before molding, in manufacturing a water-containing heat-resistant chocolate.

Also the addition of anti-blooming agents having specific tri-glyceride compositions is known. These anti-blooming agents may typically be based on edible fats obtained by chemical interesterification of triglyceride oils using certain catalysts. Accordingly, in the art of manufacturing chocolate or chocolate-like products, there still exists a need for improving the heat stability of such products.

### Summary

The invention relates in a first aspect to a heat stable chocolate comprising a fat phase, said fat phase of said heat stable chocolate comprising:
60.0 - 99.9 % by weight of triglycerides,
40.0 - 95.0 % by weight of triglycerides having C16 - C24 saturated fatty acids in the *sn-1* and *sn-3* positions of the triglyceride and oleic acid in the *sn-2* position of the triglyceride,
0.01 - 5% by weight of sorbitan ester as an emulsifier not being lecithin,
0.1 - 15% by weight of crystalline seed,
wherein said crystalline seed comprises SatOSat-triglycerides in an amount of 40-99.9%, wherein Sat stands for a saturated fatty acid and O stands for oleic acid, wherein an endotherm melt peak position of said crystalline seed is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position,
wherein said fat phase comprises triglycerides from non-vegetable sources, said triglycerides from non-vegetable sources being selected from the group of triglycerides from sources other than native vegetable oils or fractions thereof, triglycerides obtained after transesterification, and combinations thereof, and
wherein the heat stable chocolate is obtainable by a method comprising the steps of
   a) providing a chocolate composition comprising said fat phase,
   b) adjusting the temperature of said chocolate composition to 25-39 degrees Celsius,
   c) adding said crystalline seed during stirring to produce a seeded chocolate composition, and
   d) processing said seeded chocolate composition to obtain said heat stable chocolate.

It has been found that a heat stable chocolate can be obtained by adjusting the fat phase of the chocolate to comprise crystalline seed based on SatOSat triglycerides. Very good results with respect to heat stability are obtained when the fat phase of the chocolate also comprises an emulsifier not being lecithin.

Surprisingly, a synergy with respect to obtaining heat stability of the chocolate exists between different components in the chocolate. This has been discovered by the present inventor. By combining crystalline seed based on SatOSat-triglycerides with emulsifier not being lecithin in the chocolate, an improved heat stability of the resulting chocolate may be obtained when compared to standard tempered chocolate or chocolate comprising only one or two of the mentioned chocolate components.

The invention relates in another aspect to a method of producing a heat stable chocolate, said method comprising the steps of:
a) providing a chocolate composition comprising a fat phase, said fat phase comprising
   60.0 - 99.9% by weight of triglycerides,
   40.0 - 95.0 by weight of triglycerides having C16 - C24 saturated fatty acids in the *sn-1* and *sn-3* positions of the triglyceride and oleic acid in the *sn-2* position of the triglyceride,
   0.01 - 5% by weight of sorbitan ester as an emulsifier not being lecithin,
   wherein said fat phase comprising triglycerides from non-vegetable sources, the triglycerides from non-vegetable sources being selected from the group of triglycerides from sources other than native vegetable oils or fractions thereof, triglycerides obtained after transesterification, and combinations thereof,
b) adjusting the temperature of said chocolate composition to 25-39 degrees Celsius,
c) adding 0.1 -15% by weight of said fat phase of crystalline seed during stirring to produce a seeded chocolate composition, wherein said crystalline seed comprises SatOSat-triglycerides in an amount of 40-99.9%, wherein Sat stands for a saturated fatty acid and O stands for oleic acid,
   wherein an endotherm melt peak position of said crystalline seed is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position, and
d) processing said seeded chocolate composition to obtain said heat stable chocolate.

Further aspects are uses of the heat stable chocolate according to any of its embodiments or produced by a method according to any of its embodiments for molding, coating, enrobing or filling applications.

### Detailed description of the invention

### Definitions

As used herein, the term "fatty acid" encompasses free fatty acids and fatty acid residues in triglycerides.
As used herein "edible" is something that is suitable for use as food or as part of a food product, such as a dairy or confectionary product. An edible fat is thus suitable for use as fat in food or food product and an edible composition is a composition suitable for use in food or a food product, such as a dairy or confectionary product.
As used herein, "%" or "percentage" all relates to weight percentage i.e. wt.% or wt.-% if nothing else is indicated.
As used herein, the singular forms "a", "an" and "the" include plural referents unless the context clearly dictates otherwise.
As used herein, "at least one" is intended to mean one or more, i.e. 1, 2, 3, 4, 5, 6, 7, 8, 9, 10, etc.
As used herein, "vegetable oil" and "vegetable fat" is used interchangeably, unless otherwise specified.
As used herein, the term "endotherm melt peak position" may refer to the position of a melt peak, which may be the main endotherm melt peak or it may be a smaller melt peak.
As used herein, "transesterification" should be understood as replacing one or more of the fatty acid moieties of a triglyceride with another fatty acid moiety or exchanging one or more fatty acid moieties from one triglyceride molecule to another. A fatty acid moiety may be understood as a free fatty acid, a fatty acid ester, a fatty acid anhydride, an activated fatty acid and/or the fatty acyl part of a fatty acid.
The term 'transesterification' as used herein may be used interchangeably with 'interesterification'. The transesterification process may be an enzymatic transesterification or chemical transesterification. Both chemical transesterification and enzymatic transesterification is described well in the art. Both chemical and enzymatic transesterification may be done by standard procedures.
As used herein a "chocolate" is to be understood as chocolate and/or chocolate-like products. Some chocolate comprises cocoa butter, typically in substantial amounts, where some chocolate-like product may be produced with a low amount of or even without cocoa butter, e.g. by replacing the cocoa butter with a cocoa butter equivalent, cocoa butter substitute, etc. Also, many chocolate products comprises cocoa powder or cocoa mass, although some chocolate products, such as typical white chocolates, may be produced without cocoa powder, but e.g. drawing its chocolate taste from cocoa butter. Depending on the country and/or region there may be various restrictions on which products may be marketed as chocolate. By a chocolate product is meant a product, which at least is experienced by the consumer as chocolate or as a confectionery product having sensorial attributes common with chocolate, such as e.g. melting profile, taste etc.
As used herein, the term "fraction" shall in this regard be understood to be a product remaining after a physical separation of the constituents of a natural source of a fat. This product may subsequently be subjected to a transesterification.
In this context, the term "bloom resistance" refers to a property of the chocolate to resist bloom formation. Increased or improved bloom resistance in a chocolate in the present context thus implies that the chocolate has a higher resistance towards surface blooming.
As used herein, the term "triglycerides" may be used interchangeably with the term 'triacylglycerides' and should be understood as an ester derived from glycerol and three fatty acids. "Triglycerides" may be abbreviated TG or TAG. A single triglyceride molecule, having a specific molecular formula, is of either vegetable or non-vegetable origin. Some triglycerides, like for example StOSt-triglycerides, may be obtained from both vegetable and/or non-vegetable sources. Thus a fat phase comprising StOSt-triglycerides, may comprise StOSt-triglycerides obtained solely from vegetable sources or StOSt-triglycerides obtained solely from non-vegetable sources or a combination thereof i.e. the fat phase may comprise some StOSt-triglyceride molecules obtained from vegetable sources and some StOSt-triglycerides molecules obtained from non-vegetable sources.
As used herein, the term "vegetable" shall be understood as originating from a plant retaining its original chemical structure. Thus, vegetable fat or vegetable triglycerides are still to be understood as vegetable fat or vegetable triglycerides after fractionation etc. as long as the chemical structures of the fat components or the triglycerides are not altered. When vegetable triglycerides are for example transesterified they are no longer to be understood as a vegetable triglyceride in the present context.
Similarly, the term "non-vegetable" in the context of "non-vegetable triglyceride" or "non-vegetable fat" when used herein is intended to mean obtained from other sources than native vegetable oils or fractions thereof, or obtained after transesterification. Examples of non-vegetable triglycerides may for example be, but are not limited to, triglycerides obtained from unicellular organisms, animal fat, and/or transesterification.
As used herein "crystalline seed" is intended to mean a seed comprising crystals capable of seeding a chocolate in predominantly form V. The crystalline seed may be solid or it may be partly melted, such as for example in a slurry, partly molten, paste-like state. When solid, the crystalline seed may be in the form of particles, where such particles include flakes, pellets, granules, chips, and powder.
As used herein, the term "slurry" is a partly melted composition, where at least some seed crystals capable of seeding chocolate are present. Thus, a "slurry" may also for example be understood as a partly melted suspension, partly molten suspension or a paste.
As used herein "partly melted" is intended to mean not totally melted and not totally solid or crystalline. Within a certain temperature range the seed product has to be melted enough to be pumpable, and may not be melted to an extent that no seed crystals capable of seeding chocolate remains. In certain embodiments partly melted may be understood more narrow, for example that a certain percentage is melted and a certain percentage is non-melted, i.e. solid or crystalline. This may for example be represented by the solid fat content (SFC). Several methods for measuring SFC are known in the art.
As used herein "cocoa butter equivalent" is intended to mean an edible fat having very similar physical properties and being compatible with cocoa butter without any significant effect on the behavior of the chocolate. In both cocoa butter and cocoa butter equivalent the fatty acids are typically palmitic, stearic and oleic acids and the triglycerides are typically 2-oleo di-saturated (SatOSat). In spite of their similarity to cocoa butter, cocoa butter equivalents can be detected in chocolate by their triglyceride ratios which are appreciably different from those in cocoa butter. Cocoa butter equivalents are e.g. made from a mix of palm mid fraction and a fractionated part of shea stearin.
As used herein "cocoa butter improver" is intended to mean a harder version (i.e. has a higher solid fat content) of cocoa butter equivalent due to a higher content of high melting triglycerides such as StOSt. It is usually used in chocolate formulations having a high content of milk fat or those meant for tropical climates. It improves the heat stability of soft cocoa butter varieties, adds more solid fat and thereby increases hardness in chocolate products.
As used herein a "heat stable chocolate" is a chocolate which has a relatively high resistance to heat, and heat-related effects, particularly bloom. The heat stable chocolate will in certain embodiments retain this heat stability, particularly bloom stability, at temperatures above which such stability is normally lost for conventional chocolate products.
As used herein a "chocolate" is to be understood as chocolate and/or chocolate-like products. Some chocolate comprises cocoa butter, typically in substantial amounts, where some chocolate-like product may be produced low or even without cocoa butter, e.g. by replacing the cocoa butter with cocoa butter equivalent, cocoa butter substitute, etc. Also, many chocolate products comprises cocoa powder or cocoa mass, although some chocolate products, such as typical white chocolates, may be produced without cocoa powder, but e.g. drawing its chocolate taste from cocoa butter. Depending on the country and/or region there may be various restrictions on which products may be marketed as chocolate. By a chocolate product is meant a product, which at least is experienced by the consumer as chocolate or as a confectionery product having sensorial attributes common with chocolate, such as e.g. melting profile, taste etc.

### Abbreviations

Sat = saturated fatty acid/acyl-group
U = unsaturated fatty acid/acyl-group
St = stearic acid/stearate
A = arachidic acid/arachidate
B = behenic acid/behenate
Lig = lignoceric acid/lignocerate
O = oleic acid/oleate
DSC = Differential Scanning Calorimetry
AOCS = American Oil Chemists' Society
CB = cocoa butter
CBE = cocoa butter equivalent
CBI = cocoa butter improver
STS = sorbitan-tri-stearate

The invention relates to a heat stable chocolate comprising a fat phase, said fat phase of said heat stable chocolate comprising:
60.0 - 99.9 % by weight of triglycerides,
40.0 - 95.0 % by weight of triglycerides having C16 - C24 saturated fatty acids in the *sn-1* and *sn-3* positions of the triglyceride and oleic acid in the *sn-2* position of the triglyceride,
0.01 - 5% by weight of sorbitan ester as an emulsifier not being lecithin,
0.1-15% by weight of crystalline seed,
wherein said crystalline seed comprises SatOSat-triglycerides in an amount of 40-99.9%, wherein Sat stands for a saturated fatty acid and O stands for oleic acid, wherein an endotherm melt peak position of said crystalline seed is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position,
wherein said fat phase comprises triglycerides from non-vegetable sources, said triglycerides from non-vegetable sources being selected from the group of triglycerides from sources other than native vegetable oils or fractions thereof, triglycerides obtained after transesterification, and combinations thereof, and
wherein the heat stable chocolate is obtainable by a method comprising the steps of
   a) providing a chocolate composition comprising said fat phase,
   b) adjusting the temperature of said chocolate composition to 25-39 degrees Celsius,
   c) adding said crystalline seed during stirring to produce a seeded chocolate composition, and
   d) processing said seeded chocolate composition to obtain said heat stable chocolate.

It should be understood that the triglycerides having C16 - C24 saturated fatty acids in the *sn-1* and *sn-3* positions of the triglyceride and oleic acid in the *sn-2* position of the triglyceride, form part of the total amount of triglycerides comprised in the fat phase of the heat stable chocolate.

Since 60.0-99.9% by weight of the fat phase is triglycerides, 0.1 - 40% by weight of the fat phase may be other fats than triglycerides, such as free fatty acids, monoglycerides, diglycerides or any combination thereof.

Further, 40.0-95.0 % by weight of said triglycerides are triglycerides having C16 - C24 saturated fatty acids in the *sn-1* and *sn-3* positions of the triglyceride and oleic acid in the *sn-2* position of the triglyceride. Examples of such triglycerides having C16 - C24 saturated fatty acids in the *sn-1* and *sn-3* positions of the triglyceride and oleic acid in the *sn-2* position of the triglyceride are StOSt, POSt, POP, StOA, StOB, StOLig, AOA, AOB, AOLig, BOB, BOLig, and LigOLig. Thus, if the fat phase for example comprises 60% triglycerides, then 40%-95% of said 60% triglycerides are triglycerides having C16 - C24 saturated fatty acids in the *sn-1* and *sn-3* positions of the triglyceride and oleic acid in the *sn-2* position of the triglyceride, which in this case would mean that the fat phase then comprises 24%-57% of triglycerides having C16 - C24 saturated fatty acids in the *sn-1* and *sn-3* positions of the triglyceride and oleic acid in the *sn-2* position of the triglyceride.

By including triglycerides obtained from non-vegetable sources in the fat phase, such as for example triglycerides obtained by transesterification, it may be possible to obtain fat phases comprising a relatively higher amount of specific triglycerides, such as for example StOSt, AOA or BOB, as compared to obtaining triglycerides solely from vegetable sources.

It has been found that a heat stable chocolate can be obtained by adjusting the fat phase of the chocolate to comprise crystalline seed based on SatOSat triglycerides. Very good results with respect to heat stability are obtained when the fat phase of the chocolate also comprises an emulsifier not being lecithin.

Surprisingly, a synergy with respect to obtaining heat stability of the chocolate exists between different components in the chocolate. This has been discovered by the present inventor. By combining crystalline seed based on SatOSat-triglycerides with emulsifier not being lecithin in the chocolate, an improved heat stability of the resulting chocolate may be obtained when compared to standard tempered chocolate or chocolate comprising only one or two of the mentioned chocolate components.

The improved heat stability is observed for chocolate comprising cocoa butter, a cocoa butter equivalent or combinations thereof.
The improvement becomes evident when comparing heat stable chocolate according to embodiments of the invention with prior art chocolate or chocolate not comprising both the crystalline seed of the invention and emulsifier not being lecithin. This comparison may be made for example by comparing the tendency for surface bloom for the different chocolates.

According to an advantageous embodiment, said melting thermogram is obtained by Differential Scanning Calorimetry (DSC) by a METTLER TOLEDO DSC 823e with a HUBER TC45 immersion cooling system, where 40 +/- 4 mg samples of the chocolate confectionery product is hermetically sealed in a 100 microliter aluminum pan with an empty pan as reference to produce a DSC melting thermogram
The crystalline seed material may be manufactured in different ways as long as the endotherm melt peak position of said crystalline seed itself is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position. If the melting temperature of the crystalline seed is considerably lower than about 40 degrees Celsius, the heat stability of the chocolate may be compromised.

Seeding technology is known within the chocolate art. Crystalline seed as described herein may be obtained by various processes known to the skilled person. One method for obtaining suitable seed material having a endotherm melt peak position of about 40 degrees Celsius or higher may be to melt the edible fat comprised in the seed composition by applying heat, followed by storage of the edible fat at a temperature lower than about 40 degrees Celsius, for example at about 37 degrees Celsius, for about 20 hours.

Thus, according to the invention, said fat phase comprises triglycerides having C16 - C24 saturated fatty acids in the *sn-1* and *sn-3* positions of the triglyceride and oleic acid in the *sn-2* position of the triglyceride in an amount of between 40.0 to 95.0 % by weight. The triglycerides having C16 - C24 saturated fatty acids in the *sn-1* and *sn-3* positions of the triglyceride and oleic acid in the *sn-2* position of the triglyceride are a part of the triglycerides, the triglycerides constituting 60.0 - 99.9 % by weight of the fat phase.
This means that, for example, in an embodiment where the triglyceride-content in the fat phase is 90% by weight of the fat phase, and the content of triglycerides having C16 - C24 saturated fatty acids in the *sn-1* and *sn-3* positions of the triglyceride and oleic acid in the *sn-2* position of the triglyceride in the fat phase is 70% by weight of the fat phase, there are 20% by weight of the fat phase of triglycerides other than triglycerides having C16 - C24 saturated fatty acids in the *sn-1* and *sn-3* positions of the triglyceride and oleic acid in the *sn-2* position of the triglyceride in the fat phase.

According to an embodiment of the invention, said fat phase comprises 0.2 - 12 % by weight of crystalline seed, such as 0.3 - 10 % by weight of crystalline seed, such as 0.5 - 10 % by weight of crystalline seed.

In an embodiment of the invention, the fat phase comprises cocoa butter, an emulsifier not being lecithin, and crystalline seed.

According to a further embodiment of the invention, the fat phase may comprise a chocolate butter equivalent.

In a further embodiment of the invention said fat phase has a weight-ratio between
- triglycerides having C18 - C24 saturated fatty acids in the sn-1 and sn-3 positions of the triglyceride and oleic acid in the sn-2 position of the triglyceride, and
- triglycerides having C16 - C24 saturated fatty acids in the sn-1 and sn-3 positions of the triglyceride and oleic acid in the sn-2 position of the triglyceride,
which is between 0.40 and 0.99, such as between 0.40 and 0.95, such as between 0.40 and 0.90, such as between 0.40 and 0.80, such as between 0.40 and 0.70, such as between 0.40 and 0.60, such as between 0.40and 0.50.

Surprisingly good results with respect to heat stability are obtained when the fat phase of the chocolate has this weight-ratio and comprises an emulsifier not being lecithin. By combining crystalline seed based on SatOSat-triglycerides with emulsifier not being lecithin and a fat phase having this weight-ratio in the chocolate, an improved heat stability of the resulting chocolate may be obtained when compared to standard tempered chocolate or chocolate comprising only one or two of the mentioned chocolate components.

Even further improvement becomes evident when comparing heat stable chocolate according to embodiments of the invention with prior art chocolate or chocolate not comprising all three of the crystalline seed of the invention emulsifier not being lecithin, and the weight-ratio in the fat phase between 0.40 and 0.99. This comparison may be made for example by comparing the tendency for surface bloom for the different chocolates.

In the present context it should be understood that the weight-ratio of the above embodiment is the weight-ratio between Sat(C18-C24)OSat(C18-C24) triglycerides and Sat(C16-C24)OSat(C16-C24) triglycerides, wherein said Sat(C18-C24)OSat(C18-C24) triglycerides are triglycerides having C18 - C24 saturated fatty acids in the *sn-1* and *sn-3* positions and oleic acid in the *sn-2* position, and wherein said Sat(C16-C24)OSat(C16-C24) triglycerides are triglycerides having C16 - C24 saturated fatty acids in the *sn-1* and *sn-3* positions and oleic acid in the *sn-2* position.

Triglycerides having C18 - C24 saturated fatty acids in the sn-1 and sn-3 positions and oleic acid in the sn-2 position are examples of SatOSat triglycerides. It should be understood that the saturated fatty acids in the sn-1 and the sn-3 positions may not necessarily be the same, although they may be in some cases. Examples of such triglycerides include StOSt, StOA, StOB, StOLig, AOA, AOB, AOLig, BOB, BOLig, and LigOLig.

Triglycerides having C18 - C24 saturated fatty acids in the sn-1 and sn-3 positions and oleic acid in the sn-2 position may also comprise a combination of two or more of the triglycerides StOSt, StOA, StOB, StOLig, AOA, AOB, AOLig, BOB, BOLig, and LigOLig, where these triglycerides are comprised in an amount of 30.0 - 99.0% by weight of the triglycerides having C18 - C24 saturated fatty acids in the sn-1 and sn-3 positions and oleic acid in the sn-2 position, such as 40.0 - 99.0% by weight, such as 50.0 - 99.0% by weight, such as 60.0 - 99.0% by weight, such as 70.0 - 99.0% by weight.

Among other things, texture parameters and sensorial properties may play a role in deciding the optimum weight-ratio in the fat phase between Sat(C18-C24)OSat(C18-C24) and Sat(C16-C24)OSat(C16-C24).

According to a further embodiment of the invention said fat phase has a weight-ratio between
- triglycerides having C18 - C24 saturated fatty acids in the sn-1 and sn-3 positions of the triglyceride and oleic acid in the sn-2 position of the triglyceride, and
- triglycerides having C16 - C24 saturated fatty acids in the sn-1 and sn-3 positions of the triglyceride and oleic acid in the sn-2 position of the triglyceride,
which is between 0.40 and 0.95, such as between 0.41 and 0.95, such as between 0.41 and 0.60, or such as between 0.40 and 0.60, such as between 0.40 and 0.50.

According to a further embodiment of the invention said fat phase has a weight-ratio between
- triglycerides having C18 - C24 saturated fatty acids in the sn-1 and sn-3 positions of the triglyceride and oleic acid in the sn-2 position of the triglyceride, and
- triglycerides having C16 - C24 saturated fatty acids in the sn-1 and sn-3 positions of the triglyceride and oleic acid in the sn-2 position of the triglyceride,
which is between 0.40 and 0.50. One advantageous of this embodiment may that a combination of a relatively bloom resistant chocolate with good texture and sensoric properties. This may be particularly advantageous when using an emulsifier not being lecithin, for example an emulsifier selected from the group consisting of sorbitan esters, such as sorbitan-tri-stearate.

According to an even further embodiment of the invention, the fat phase has a weight-ratio between
- triglycerides having C18 saturated fatty acids in the sn-1 and sn-3 positions of the triglyceride and oleic acid in the sn-2 position of the triglyceride, and
- triglycerides having C16 - C18 saturated fatty acids in the sn-1 and sn-3 positions of the triglyceride and oleic acid in the sn-2 position of the triglyceride,
which is between 0.40 and 0.99, such as between 0.40 and 0.95, such as between 0.40 and 0.90, such as between 0.40 and 0.80, such as between 0.40 and 0.70, such as between 0.40 and 0.60, such as between 0.40 and 0.50. This means that the fat phase of the heat stable chocolate may comprise a higher amount of StOSt-triglycerides than found in chocolate based on cocoa butter with no added StOSt, which in combination with a seed having an endotherm melt peak position about 40 degrees Celsius or higher when measured by Differential Scanning Calorimetry may give a heat stable chocolate that is bloom resistant even when the chocolate is exposed to temperatures above the melting point of the chocolate fat phase and which also may retain its sensoric properties.

According to a further embodiment of the invention, the fat phase has a weight-ratio between
- triglycerides having C18 saturated fatty acids in the sn-1 and sn-3 positions of the triglyceride and oleic acid in the sn-2 position of the triglyceride, and
- triglycerides having C16 - C18 saturated fatty acids in the sn-1 and sn-3 positions of the triglyceride and oleic acid in the sn-2 position of the triglyceride,
which is between 0.40 and 0.50. One advantageous of this embodiment may that a combination of a relatively bloom resistant chocolate with good texture and sensoric properties. This may be particularly advantageous when using an emulsifier not being lecithin, for example an emulsifier selected from the group consisting of sorbitan esters, such as sorbitan-tri-stearate.

According to still a further embodiment of the invention, the fat phase of the heat stable chocolate comprises:
60.0 - 99.9 % by weight of triglycerides,
40.0 - 95.0 % by weight of triglycerides having C16 - C24 saturated fatty acids in the *sn-1* and *sn-3* positions of the triglyceride and oleic acid in the *sn-2* position of the triglyceride,
0.01 - 5% by weight of an emulsifier not being lecithin,
0.1-15% by weight of crystalline seed,
wherein said crystalline seed comprises SatOSat-triglycerides in an amount of 40-99.9%, wherein Sat stands for a saturated fatty acid and O stands for oleic acid,
wherein said fat phase has a weight-ratio between
   - triglycerides having C18 - C24 saturated fatty acids in the sn-1 and sn-3 positions of the triglyceride and oleic acid in the sn-2 position of the triglyceride, and
   - triglycerides having C16 - C24 saturated fatty acids in the sn-1 and sn-3 positions of the triglyceride and oleic acid in the sn-2 position of the triglyceride,
which is between 0.40 and 0.99,
wherein an endotherm melt peak position of said crystalline seed is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position, and
wherein said fat phase comprises triglycerides from non-vegetable sources.

The weight ratio between Sat(C18-C24)OSat(C18-C24) triglycerides and Sat(C16-C24)OSat(C16-C24) triglycerides may be higher than that of cocoa butter. This may be obtained when the fat phase of the heat stable chocolate in addition to cocoa butter comprises triglycerides such as StOSt, AOA, BOB or LigOLig.

According to a further embodiment of the invention the crystalline seed may comprise a relatively high amount of triglycerides having C18 - C24 saturated fatty acids in the *sn-1* and *sn-3* positions and oleic acid in the *sn-2* position, such as an amount higher than that of cocoa butter. Triglycerides of this composition, i.e. triglycerides having C18 - C24 saturated fatty acids in the *sn-1* and *sn-3* positions and oleic acid in the *sn-2* position, may form polymorphic crystal forms that have melting points at desired temperatures above 40 degrees Celsius and form polymorphic crystal forms that resemble or may be able to induce the desired form V polymorphic crystal form of chocolate when used as a seed for seeding chocolate. According to still a further embodiment of the invention the fat phase of the heat stable chocolate may comprise a chocolate butter improver. This may lead to a relatively high or higher amount of triglycerides having C18 - C24 saturated fatty acids in the *sn-1* and *sn-3* positions and oleic acid in the *sn-2* position than when the fat phase does not comprise a chocolate butter improver.

One way of obtaining the heat stable chocolate of the invention may be by ensuring that the fat phase of the heat stable chocolate comprises the following:
0.1 -15% by weight of crystalline seed,
0.01 - 5% by weight of an emulsifier not being lecithin,
said fat phase of said heat stable chocolate further comprising
25 -94.9% by weight of a cocoa butter, a cocoa butter equivalent or combinations thereof, and
at least 5% by weight of a cocoa butter improver,
wherein said crystalline seed comprises SatOSat-triglycerides in an amount of between 40 - 95% by weight of said crystalline seed and StOSt-triglycerides in an amount of 30 - 85% by weight of said crystalline seed,
wherein the endotherm melt peak position of said crystalline seed is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position, and
wherein Sat stands for a saturated fatty acid, St stands for stearic acid and O stands for oleic acid.

Several natural sources are available to establish a cocoa butter improver (CBI). For example, the CBI may be selected from the group consisting of fats obtained from shea, sal, mango, mowra, kokum, illipe, cupuacu, allanblackia, pentedesma fractions thereof and any combination thereof. Functions of the CBI can be many, including improvements of the chocolate with respect to heat stability and sensory properties. CBI may raise the melting point of the chocolate due to a higher solid fat content when compared to CB.
According to an embodiment of the invention, CBI may be present in an amount of at least 5% of the fat phase in the chocolate. In some embodiments CBI may be added up to 40% by weight of the fat phase or 35% by weight of the fat phase. Among other things, texture parameters may play a role in deciding the optimum amount of CBI in the chocolate.

It may be advantageous to obtain a heat stable chocolate having an endotherm melt peak position of which is relatively high. Therefore, in an embodiment of the invention, the endotherm melt peak position of said heat stable chocolate is about 37 degrees Celsius or higher, such as about 38 degrees Celsius or higher, when measured by Differential Scanning Calorimetry by heating samples of 40 +/- 4 mg of heat stable chocolate from 30 degrees Celsius to 65 degrees Celsius at a rate of 3 degrees Celsius per minute to produce a melting thermogram defining said endotherm melt peak position.

It has been found that small amounts of fat crystals with higher melting points, for example having endotherm melt peak positions above 37degrees Celsius, such as above 38 degrees Celsius, when measured by DSC, may be obtained in the above embodiment when compared to standard tempering, which may typically provide endotherm melt peak positions around 30-33 degrees Celsius, depending on the specific recipe and fat composition. Furthermore, it may be beneficial in addition to the crystalline seed to add an amount of fat such as a cocoa butter improver to the fat phase to obtain an advantageous heat stable chocolate. The DSC melt peak position of the seed in the fat phase may be shifted to a lower value when present in a fat phase comprising other components/compositions than the seed alone, and this phenomenon may be due to an eutectic effect.

The exact position of the endotherm melt peak position may vary, e.g. due to the specific content of triglycerides and different polymorphic crystal forms. In an embodiment of the invention an endotherm melt peak position of the heat stable chocolate is between about 37-40 degrees Celsius, when measured by Differential Scanning Calorimetry by heating samples of 40 +/- 4 mg of heat stable chocolate from 30 degrees Celsius to 65 degrees Celsius at a rate of 3 degrees Celsius per minute to produce a melting thermogram defining the endotherm melt peak position. An endotherm melt peak position of the heat stable chocolate between about 37-40 degrees Celsius may be obtainable, when the seed comprised in that fat phase of the heat stable chocolate comprises at least 40% StOSt. The seed may in this case be present in the fat phase in an amount of at least 1% by weight.

The fat phase may have different compositions. In an embodiment of the invention the fat phase comprises 60.0 - 95.0 % by weight of triglycerides having C16 - C24 saturated fatty acids in the *sn-1* and *sn-3* positions of the triglyceride and oleic acid in the *sn-2* position of the triglyceride, such as 70-95 % by weight, such as 80-95% by weight.

According to a further embodiment of the invention the fat phase comprises 50 - 95 % by weight triglycerides having C16 - C24 saturated fatty acids in the *sn-1* and *sn-3* positions of the triglyceride and oleic acid in the *sn-2* position of the triglyceride, in an amount of 50 - 95 % by weight of said heat stable chocolate, such as 60.0 - 95.0%, such as 70-95%, or such as 50-90%. Examples of triglycerides having C16 - C24 saturated fatty acids in the *sn-1* and *sn-3* positions of the triglyceride and oleic acid in the *sn-2* position of the triglyceride comprise POP, POSt, StOSt, StOA, StOB, StOLig, AOA, AOB, AOLig, BOB, BOLig and LigOLig triglycerides.

Therefore, in an embodiment the fat phase comprises StOSt-triglycerides in an amount of 0.1 - 50.0% by weight of said fat phase, such as such as 20 - 50%, such as 25-45%, such as 30-40%.

According to another embodiment the fat phase comprises AOA-triglycerides in an amount of 0.1 - 20.0% by weight of said fat phase, such as such as 0.1 - 15%, such as 5-15%, or such as 10-15%.

According to a further embodiment the fat phase comprises BOB-triglycerides in an amount of 0.1 - 20.0% by weight of said fat phase, such as such as 0.1 - 15%, such as 5-15%, or such as 10-15%.

According to still a further embodiment the fat phase comprises LigOLig-triglycerides in an amount of 0.1 - 20.0% by weight of said fat phase, such as such as 0.1 - 15%, such as 5-15%, or such as 10-15%.

The crystalline seed may have different compositions. In an embodiment of the invention the crystalline seed comprises SatOSat-triglycerides in an amount of 40 - 99% by weight of said crystalline seed, such as 50 - 99%, such as 60 - 99, such as 70-98%. The role of the crystalline seed in the chocolate is to promote heat stability of the chocolate. It has been found that desired crystallization of chocolate fats rich in SatOSat may be best promoted by crystalline seed of a similar triglyceride composition. SatOSat triglycerides may for example comprise triglycerides having C18-C24 saturated fatty acids. Thus, in a further embodiment of the invention the crystalline seed comprises 40 - 99 % by weight of triglycerides having C18 - C24 saturated fatty acids in the *sn-1* and *sn-3* positions of the triglyceride and oleic acid in the *sn-2* position of the triglyceride, such as 50 - 99 % by weight, such as 70 - 99 % by weight, such as 80 - 99 % by weight.

According to an embodiment of the invention, the crystalline seed comprises 40 - 99 % by weight of StOSt-triglycerides, such as 50 - 99 % by weight, such as 70 - 99 % by weight, such as 80 - 99 % by weight.

According to an embodiment of the invention, the seed composition is substantially free of non-fat components, such as sugar or cocoa powder. Thus, the seed composition may have a non-fat content of less than 5% by weight, such as less than 1% by weight, such as less than 0.1% by weight.

Increasing the amounts of triglycerides having C18 - C24 saturated fatty acids in the *sn-1* and *sn-3* positions of the triglyceride and oleic acid in the *sn-2* position of the triglyceride may increase the melting point of the crystalline seed, e.g. compared to cocoa butter. Thus, in a further embodiment of the invention the crystalline seed has a weight-ratio between
- triglycerides having C18 - C24 saturated fatty acids in the sn-1 and sn-3 positions of the triglyceride and oleic acid in the sn-2 position of the triglyceride, and
- triglycerides having C16 - C24 saturated fatty acids in the sn-1 and sn-3 positions of the triglyceride and oleic acid in the sn-2 position of the triglyceride,
which is between 0.40 and 0.99, such as between 0.45 and 0.99, such as between 0.50 and 0.99, such as between 0.55 and 0.99, such as between 0.60 and 0.99, such as between 0.65 and 0.99, such as between 0.70 and 0.99.

According to a further embodiment of the invention, the crystalline seed has a weight-ratio between
- triglycerides having C18 saturated fatty acids in the sn-1 and sn-3 positions of the triglyceride and oleic acid in the sn-2 position of the triglyceride, and
- triglycerides having C16 - C18 saturated fatty acids in the sn-1 and sn-3 positions of the triglyceride and oleic acid in the sn-2 position of the triglyceride,
which is between 0.40 and 0.99, such as between 0.45 and 0.99, such as between 0.50 and 0.99, such as between 0.55 and 0.99, such as between 0.60 and 0.99, such as between 0.65 and 0.99, such as between 0.70 and 0.99.

According to still a further embodiment the crystalline seed comprises StOSt-triglycerides in an amount of 30-99% by weight of said crystalline seed, such as 40-99%, such as such as 60-99%, such as 70-99%, or such as 50-80%.Thus, according to this embodiment, the crystalline seed comprises StOSt-triglycerides in an amount of between 30 - 99% by weight of the crystalline seed.
The StOSt-triglycerides are a part of the SatOSat-triglycerides, the SatOSat-triglycerides comprising 40 - 99.9 % by weight of the crystalline seed.
This means that, for example, in an embodiment where the SatOSat-content in the crystalline seed is 50% by weight of the crystalline seed, and the StOSt-content in the crystalline seed is 45% by weight of the crystalline seed, there are 5% by weight of the crystalline seed of SatOSat-triglycerides other than StOSt-triglycerides in the crystalline seed. It has been found that crystalline seed rich in StOSt is well suited for the heat stable chocolate according to advantageous embodiments of the invention. The reason for this may be that both cocoa butter and also many cocoa butter equivalents are rich in StOSt.

In an embodiment of the invention said crystalline seed comprises or consists of shea stearin.
Crystalline seed comprising or consisting of shea stearin may be particularly advantageous. It has been found that there is an excellent compatibility of such crystalline seed with both CB and CBE and an excellent texture of the chocolate may be provided.

As an alternative to StOSt, or in addition thereto, the crystalline seed may comprise AOA triglycerides, BOB triglycerides, or LigOLig triglycerides. Therefore, according to another embodiment the crystalline seed comprises AOA-triglycerides in an amount of 30-99% by weight, such as 40-99%, such as 60-99%, such as 70-99%, such as 70-90%.

According to a further embodiment the crystalline seed comprises BOB-triglycerides in an amount of 30-99% by weight, such as 40-99%, such as 60-99%, such as 70-99%, such as 70-90%.

According to still a further embodiment the crystalline seed comprises LigOLig-triglycerides in an amount of 30-99% by weight, such as 40-99%, such as 60-99%, such as 70-99%, such as 70-90%.

Examples of triglycerides from non-vegetable sources include triglycerides obtained from transesterification and triglycerides obtained from unicellular organisms.

The triglycerides comprised in the fat phase according to the embodiments of the invention may be obtained from different sources and produced in different ways. In an embodiment of the invention the fat phase comprises triglycerides obtained by transesterification in an amount of 0.1-99.9% by weight of said fat phase, such as 1-20%, such as 2-15%, such as 3-10%.The triglycerides obtained by transesterification may predominantly be triglycerides.

In an embodiment of the invention, the triglycerides obtained by transesterification comprises triglycerides obtained from an edible fat and a saturated fatty acid source under the influence of enzymes having 1,3-specific transesterification activity.

In an embodiment of the process of the invention and all its embodiments, the triglycerides obtained by transesterification comprises triglycerides obtained from an edible fat and a saturated fatty acid source under the influence of an acid,a base or a non-enzymatic catalyst or any combination thereof.

In a further embodiment of the invention the triglycerides obtained by transesterification may comprise non-symmetric triglycerides and a combination of short and long chain triglycerides. The triglycerides obtained by transesterification may alternative or in combination therewith comprise mono-unsaturated symmetric or asymmetric triglycerides.

If the crystalline seed comprises a relatively large amount of triglycerides obtained by transesterification, the triglyceride composition of the triglycerides obtained by transesterification may be similar to the triglyceride composition of the fat phase. Therefore, according to another embodiment of the invention the crystalline seed comprises SatOSat-triglycerides obtained by transesterification in an amount of 0.01-99.9% by weight, such as 20-99%, such as 40-99%, such as 70-99%.

According to a further embodiment of the invention, the StOSt-triglycerides comprise StOSt-triglycerides obtained from transesterification in an amount of 0.1-99.9% by weight of said StOSt-triglycerides, such as 50-99.9%, such as 80-99.9%, such as 90-99.9%, such as 95-99.9%. The fat phase may for example comprise StOSt-triglycerides obtained from transesterification in an amount of 1-20%, and the crystalline seed may comprise StOSt-triglycerides obtained from transesterification in an amount of 70-99%.

According to still a further embodiment of the invention, the AOA-triglycerides comprise AOA-triglycerides obtained from transesterification in an amount of 0.1-99.9% by weight of said AOA-triglycerides, such as 50-99.9%, such as 80-99.9%, such as 90-99.9%, such as 95-99.9%.The fat phase may for example comprise AOA-triglycerides obtained from transesterification in an amount of 1-20% and the crystalline seed may comprise AOA-triglycerides obtained from transesterification in an amount of 70-99%. The transesterified AOA-triglycerides may be produced from high oleic sunflower, high oleic safflower oil, or high oleic rapeseed oil and arachidic acid methyl esters under the influence of a 1,3-specific lipase such as Rhizopus delemar, Mucor miehei, Aspergillus niger, Rhizopus arrhizus, Rhizopus niveus, Mucor javanicus, Rhizopus javanicus, Rhicomucor miezei, Rhizopus oxyzae, or combinations thereof. Other 1,3-specific lipases may also be used.

According to another embodiment of the invention the BOB-triglycerides comprise BOB-triglycerides obtained from transesterification in an amount of 0.1-99.9% by weight of said BOB-triglycerides, such as 50-99.9%, such as 80-99.9%, such as 90-99.9%, such as 95-99.9%. The fat phase may for example comprise BOB-triglycerides obtained from transesterification in an amount of 1-20% and the crystalline seed may comprise BOB-triglycerides obtained from transesterification in an amount of 70-99%. The transesterified BOB-triglycerides may be produced from high oleic sunflower, high oleic safflower oil, or high oleic rapeseed oil and behenic acid methyl esters under the influence of a 1,3-specific lipase such as Rhizopus delemar, Mucor miehei, Aspergillus niger, Rhizopus arrhizus, Rhizopus niveus, Mucor javanicus, Rhizopus javanicus, Rhicomucor miezei, Rhizopus oxyzae, or combinations thereof. Other 1,3-specific lipases may also be used.

According to yet another embodiment of the invention the LigOLig-triglycerides comprise LigOLig-triglycerides obtained from transesterification in an amount of 0.1-99.9% by weight of said LigOLig-triglycerides, such as 50-99.9%, such as 80-99.9%, such as 90-99.9%, such as 95-99.9%. The fat phase may for example comprise LigOLig- triglycerides obtained from transesterification in an amount of 1-20% and the crystalline seed may comprise LigOLig-triglycerides obtained from transesterification in an amount of 70-99%. The transesterified LigOLig-triglycerides may be produced from high oleic sunflower, high oleic safflower oil, or high oleic rapeseed oil and lignoceric acid methyl esters under the influence of a 1,3-specific lipase such as Rhizopus delemar, Mucor miehei, Aspergillus niger, Rhizopus arrhizus, Rhizopus niveus, Mucor javanicus, Rhizopus javanicus, Rhicomucor miezei, Rhizopus oxyzae, or combinations thereof. Other 1,3-specific lipases may also be used.

The triglycerides obtained by transesterification according to the embodiments of the invention may be produced from an edible fat and a saturated fatty acid source under the influence of enzymes having 1,3-specific transesterification activity. Enzymes having 1,3-specific transesterification activity may be well suited to produce SatOSat triglycerides when starting from a triglycerides having oleic acid in the sn-2 position of the triglyceride. The enzymes having 1,3-specific transesterification activity comprises e.g. lipases of Rhizopus delemar, Mucor miehei, Aspergillus niger, Rhizopus arrhizus, Rhizopus niveus, Mucor javanicus, Rhizopus javanicus, Rhicomucor miezei, Rhizopus oxyzae or combinations thereof. Other 1,3-specific lipases may also be used. The saturated fatty acid source may for example be fatty acid methyl esters such as stearic acid methyl ester, arachidic acid methyl ester, behenic acid methyl ester and lignoceric acid methyl ester. Other protected fatty acids of stearate, arachidate, behenate and lignocerate may also be used.

According to an embodiment of the invention, the saturated fatty acid source comprises stearic acid and/or stearic acid esters, such as stearic acid methyl ester.

According to a further embodiment of the invention, the saturated fatty acid source comprises arachidic acid and/or arachidic acid esters, such as arachidic acid methyl ester.

According to still a further embodiment of the invention, the saturated fatty acid source comprises behenic acid and/or behenic acid esters, such as behenic acid methyl ester.

According to an even further embodiment of the invention, the saturated fatty acid source comprises lignoceric acid and/or lignoceric acid esters, such as lignoceric acid methyl ester.

According to another embodiment of the invention the triglycerides obtained by transesterification are produced from an edible fat and a saturated fatty acid source under the influence of an acid, a base or a non-enzymatic catalyst or any combination thereof.

According to a further embodiment of the invention, the triglycerides obtained by transesterification are produced from an edible fat and a stearic acid source under the influence of enzymes having 1,3-specific transesterification activity.

Various edible fats may be used as a starting point for transesterification. In an embodiment of to the invention the edible fat used for transesterification comprises a vegetable fat selected from a group consisting of fats obtained from shea, sunflower, soy, rapeseed, sal, safflower, soy, palm, kokum, illipe, mango, mowra, cupuacu and any fraction and any combination thereof. Fats obtained from shea, sunflower, soy, rapeseed, sal, safflower, palm, kokum, illipe, mango, mowra, or cupuacu may contain a relatively high amount of triglycerides with an unsaturated fat like for example olein in position 2, which makes them very suitable for transesterification to obtain SatOSat-triglycerides.
According to an embodiment of the invention, the edible fat used for transesterification comprises high oleic sunflower, high oleic safflower oil, high oleic rapeseed oil or any combination thereof.

In a further embodiment of the invention the edible fat used for transesterification comprises or consists of high oleic sunflower, high oleic safflower oil, high oleic rapeseed oil or any combination thereof.

Generally, it should be understood that various oils and fats may be used as the vegetable fat. Particularly preferred oils and fats may be those having a relatively high content of triglycerides having oleic acid in the sn-2 position.

In an embodiment of the invention, the fat phase comprises StOSt-triglycerides produced from high oleic sunflower oil and stearic acid methyl esters under the influence of a 1,3-specific lipase such as Rhizopus delemar, Mucor miehei, Aspergillus niger, Rhizopus arrhizus, Rhizopus niveus, Mucor javanicus, Rhizopus javanicus, Rhicomucor miezei, Rhizopus oxyzae, or combinations thereof. Other 1,3-specific lipases may also be used. Other stearic acid esters like for example stearic acid ethyl ester may be used. Stearic acid anhydride may also be used as the stearate source in the transesterification reaction.

In an embodiment of the invention, the fat phase comprises StOSt-triglycerides produced from high oleic safflower oil and stearic acid methyl ester under the influence of a 1,3-specific lipase such as Rhizopus delemar, Mucor miehei, Aspergillus niger, Rhizopus arrhizus, Rhizopus niveus, Mucor javanicus, Rhizopus javanicus, Rhicomucor miezei, Rhizopus oxyzae, or combinations thereof. Other 1,3-specific lipases may also be used.

In an embodiment of the invention, the fat phase comprises StOSt-triglycerides produced from high oleic rapeseed oil and stearic acid methyl ester under the influence of a 1,3-specific lipase such as Rhizopus delemar, Mucor miehei, Aspergillus niger, Rhizopus arrhizus, Rhizopus niveus, Mucor javanicus, Rhizopus javanicus, Rhicomucor miezei, Rhizopus oxyzae, or combinations thereof. Other 1,3-specific lipases may also be used.

In a further embodiment of the invention the edible fat used for transesterification comprises or consists of a shea olein or a shea olein fraction.

In still a further embodiment of the invention, the fat phase comprises StOSt-triglycerides produced from shea olein and stearic acid methyl esters under the influence of a 1,3-specific lipase such as Rhizopus delemar, Mucor miehei, Aspergillus niger, Rhizopus arrhizus, Rhizopus niveus, Mucor javanicus, Rhizopus javanicus, Rhicomucor miezei, Rhizopus oxyzae, or combinations thereof. Other 1,3-specific lipases may also be used.

According to a further embodiment of the invention, the crystalline seed comprises SatOSat triglycerides obtained from unicellular organisms. The fat phase may for example comprise triglycerides obtained from unicellular organisms in an amount of 0.1-99.9% by weight of said fat phase, such as 1-20%, such as 1-15%, such as 2-10%, such as 5-10%.

It should be understood that triglycerides obtained from unicellular organisms may be extracted using one or more of various techniques suitable and known within the field. It should be understood that in some embodiments the triglycerides obtained from unicellular organisms may be produced by only a single type of unicellular organisms, whereas in some other embodiments two or more different types of unicellular organisms are used. Examples of usable unicellular organisms are unicellular organisms selected from the group consisting of bacteria, algae or fungi, wherein fungi comprise yeast and mold.

In an embodiment of the invention the crystalline seed comprises SatOSat triglycerides obtained from unicellular organisms in an amount of 0.1-99.9 % by weight, such as 20-99%, such as 40-99%, such as 70-99%.

According to a further embodiment of the invention, the crystalline seed comprises SatOSat triglycerides obtained from unicellular organisms. The SatOSat triglycerides obtained from unicellular organisms may comprise for example POP, POSt, StOSt, StOA, AOA, StOB, AOB, BOB, StOLig, AOLig, BOLig and LigOLig triglycerides.

According to a further embodiment of the invention, the StOSt-triglycerides comprise StOSt-triglycerides obtained from unicellular organisms in an amount of 0.1-99.9% by weight of said StOSt-triglycerides, such as 50-99.9%, such as 80-99.9%, such as 90-99.9%, such as 95-99.9%. The fat phase may for example comprise StOSt-triglycerides obtained from unicellular organisms in an amount of 1-20%, and the crystalline seed may comprise StOSt-triglycerides obtained from unicellular organisms in an amount of 70-99%.

According to still a further embodiment of the invention, the AOA-triglycerides comprise AOA-triglycerides obtained from unicellular organisms in an amount of 0.1-99.9% by weight of said AOA-triglycerides, such as 50-99.9%, such as 80-99.9%, such as 90-99.9%, such as 95-99.9%.The fat phase may for example comprise AOA-triglycerides obtained from unicellular organisms in an amount of 1-20% and the crystalline seed may comprise AOA-triglycerides obtained from unicellular organisms in an amount of 70-99%.

According to another embodiment of the invention the BOB-triglycerides comprise BOB-triglycerides obtained from unicellular organisms in an amount of 0.1-99.9% by weight of said BOB-triglycerides, such as 50-99.9%, such as 80-99.9%, such as 90-99.9%, such as 95-99.9%. The fat phase may for example comprise BOB-triglycerides obtained from unicellular organisms in an amount of 1-20 and the crystalline seed may comprise BOB-triglycerides obtained from unicellular organisms in an amount of 70-99%.

According to yet another embodiment of the invention the LigOLig-triglycerides comprise LigOLig-triglycerides obtained from unicellular organisms in an amount of 0.1-99.9% by weight of said LigOLig-triglycerides, such as 50-99.9%, such as 80-99.9%, such as 90-99.9%, such as 95-99.9%. The fat phase may for example comprise LigOLig- triglycerides obtained from unicellular organisms in an amount of 1-20 and the crystalline seed may comprise LigOLig-triglycerides obtained from unicellular organisms in an amount of 70-99%.

The unicellular organism may be selected from the group consisting of bacteria, algae and fungi, wherein fungi comprise yeast and mold.

In an embodiment of the invention, the fat phase comprises triglycerides produced by bacteria in an amount of 1-20%. The triglycerides produced by bacteria may comprise StOSt. They may also for example comprise BOB.

In a further embodiment of the invention, the fat phase comprises triglycerides produced by algae in an amount of 1-20%. The triglycerides produced by algae may comprise StOSt. They may also for example comprise BOB.

In another embodiment of the invention, the fat phase comprises triglycerides produced by yeast in an amount of 1-20%. The triglycerides produced by yeast may comprise StOSt. They may also for example comprise BOB.

According to a further embodiment of the invention, the fat phase comprises triglycerides produced by mold in an amount of 1-20%. The triglycerides produced by mold may comprise StOSt. They may also for example comprise BOB.

The heat stable chocolate of the invention comprise an emulsifier not being lecithin, According to the invention, the emulsifier not being lecithin is sorbitan ester. In a further embodiment of the invention the emulsifier not being lecithin comprises or is sorbitan-tri-stearate.
It has surprisingly been found that sorbitan-tri-stearate promotes the heat stability when applied together with crystalline seed in a chocolate, possibly where the weight-ratio of the fat phase between Sat(C18-C24)OSat(C18-C24) and Sat(C16-C24)OSat(C16-C24) is 0.40-0.99, which weight-ratio may for example be obtained by using e.g. a CBI. The combination of sorbitan-tri-stearate and a crystalline seed, which comprises 40 - 99 % by weight of StOSt-triglycerides and displays an endotherm melt peak above 40 degrees Celsius, and weight-ratio of StOSt and Sat(C16-C18)OSat(C16-C18) between 0.40-0.99 in the fat phase of the heat stable chocolate, will provide a surprisingly heat stable chocolate, which is bloom resistant and retains its sensoric properties even when the heat stable chocolate has been exposed to temperatures above the melting point of the heat stable chocolate, such as for example above 36 or 37 degrees Celsius. The bloom resistance and ability to retain sensoric properties of the heat stable chocolate may also be persistent over time and maintained after repeated exposure to elevated temperatures.

In an embodiment of the invention the heat stable chocolate comprises lecithin. The heat stable chocolate may thus for example comprise both lecithin and STS.

The heat stable chocolate may comprise vegetable fat from various sources. In a further embodiment of the invention the fat phase comprises fat obtained from shea, sal, kokum, illipe, mango, mowra, cupuacu, allanblackia, pentadesma, any fraction or any combination thereof. Generally, it should be understood that various oils and fats may be used as the vegetable fat. The oils and fats may be those having a relatively high content of triglycerides having saturated fatty acids in the sn-1 and sn-3 position.
According to an embodiment of the invention, the fat phase comprises fractions of shea fat. Fractions of shea fat, such as shea stearin, may comprise StOSt in high amounts relative to other vegetable fats. In addition to or instead of fractions of shea other vegetable fats may be employed such as sal, kokum, illipe, mango, mowra, cupuacu, allanblackia, pentadesma or fractions ore mixtures thereof, since they comprise StOSt-triglycerides in high amounts. According to an embodiment of the invention these fats, shea, sal, kokum, illipe, mango, mowra, cupuacu, allanblackia, pentadesma and/or fractions and/or combinations thereof may be comprised in the seed and/or a cocoa butter improver, both of which may be comprised in the fat phase of the heat stable chocolate.

These vegetable fats may be added in different amounts, depending on the specific application and desired characteristics of the heat stable chocolate. Thus, in a further embodiment of the invention the fat phase comprises fat obtained from shea, sal, kokum, illipe, mango, mowra, cupuacu, allanblackia, pentadesma, any fraction or any combination thereof in an amount of 3.0 - 95% by weight, such as 4.0 - 90% by weight of said fat composition or 5.0 - 85% by weight of said fat phase. According to an alternative embodiment, the fat phase comprises fat obtained from shea, sal, kokum, illipe, mango, mowra, cupuacu, allanblackia, pentadesma, any fraction or any combination thereof in an amount of 0.1 - 5.0 % by weight of the fat phase, such as e.g. 1-5.0 % by weight of the fat phase or 2-5.0 % by weight of the fat phase.

In a further embodiment of the invention the fat phase comprises shea fat or a fraction thereof, such as shea stearin, in an amount of 3 to 30% by weight of the fat phase of the heat stable chocolate. Shea fat may be replaced or supplemented with another fat or fats, such as sal, kokum, illipe, mango, mowra, cupuacu, allanblackia, pentadesma. These fats or fractions thereof may comprise more than 35% StOSt. The heat stable chocolate may comprise further fat components. According to an embodiment of the invention the fat phase further comprises 0.1% - 42.9% by weight of fat components being selected from the group comprising milk fat, triglycerides wherein at least one of the *sn-1* and *sn-3* positions of the triglyceride is occupied by a fatty acid different from C16 - C24 saturated fatty acid, triglycerides wherein the *sn-2* position is occupied by a fatty acid different from oleic acid, asymmetrical triglycerides, and any combination thereof. Triglycerides wherein at least one of the *sn-1* and *sn-3* positions of the triglyceride is occupied by a fatty acid different from C16 - C24 saturated fatty acid may for example be of the type SatSatO, such as StStO, PPO, BBO, AAO, LigLigO or any combination thereof. Triglycerides wherein the *sn-2* position is occupied by a fatty acid different from oleic acid may for example be of the type SatSatO, such as StStO, PPO, BBO, AAO, LigLigO or any combination thereof. Asymmetrical triglycerides may for example be of the type SatSatO-triglycerides, such as StStO, PPO, BBO, AAO, LigLigO or any combination thereof. SatSatO-triglycerides may be formed in a transesterification reaction.

The fat phase of the heat stable chocolate may comprise cocoa butter. According to a further embodiment of the invention the fat phase comprises cocoa butter in an amount of 1.0 - 92% by weight of said fat phase, such as 10 - 90% or such as 15 - 85%. The fat phase may for example comprise 70-92% cocoa butter and at least 1% crystalline seed and at least 1% STS.

The endotherm melt peak position of the crystalline seed may be increased further whereby the heat stability of the heat stable chocolate may, in many cases, be increased even further. Therefore in an embodiment of the invention the endotherm melt peak position of said crystalline seed is 41 degrees Celsius or higher, such as 42 degrees Celsius or higher, such as 43 degrees Celsius or higher, when measured by Differential Scanning Calorimetry by heating samples of 40 +/- 4 mg of crystalline seed from 30 degrees Celsius to 65 at a rate of 3 degrees Celsius per minute to produce a melting thermogram.

The endotherm melt peak position of the crystalline seed indicates the heat stability of the seed crystals and thereby indirectly may reflect the heat stability obtainable when the crystalline seed is added to chocolate. A melt peak position of the seed of around 40 to 43 degrees Celsius may typically be obtainable, when the crystalline seed comprises at least 30 % by weight of StOSt. The melting point of polymorphic forms V and VI of StOSt is around 41 degrees Celsius and 43 degrees Celsius, respectively. An endotherm melt peak position of the crystalline seed, which is above 40 degrees Celsius, such as for example between 41-43 degrees Celsius or even for example between 43 and 45 degrees Celsius, is particularly suitable for seeding a chocolate, since the melting point of the seed is above the melting point of the chocolate fat phase, and will thus retain its seeding capabilities, even when the chocolate is exposed to temperatures above the melting point of the chocolate fat phase, such as for example temperatures above 36 degrees Celsius, 37 degrees Celsius or 38 degrees Celsius.

In a further embodiment of the invention the endotherm melt peak position of said crystalline seed is about 44 degrees Celsius or higher, such as about 46 degrees Celsius or higher, such as about 47 degrees Celsius or higher or about 48 degrees Celsius or higher, when measured by Differential Scanning Calorimetry by heating samples of 40 +/- 4 mg of crystalline seed from 30 degrees Celsius to 65 at a rate of 3 degrees Celsius per minute to produce a melting thermogram.
A melt peak position of the seed of around 46 to 48 degrees Celsius may typically be obtainable, when the crystalline seed comprises at least 30 % by weight of AOA. According to a still further embodiment the endotherm melt peak position of said crystalline seed is about 50 degrees Celsius or higher, such as about 51 degrees Celsius or higher, such as about 52 degrees Celsius or higher or about 53 degrees Celsius or higher, when measured by Differential Scanning Calorimetry by heating samples of 40 +/- 4 mg of crystalline seed from 30 degrees Celsius to 65 at a rate of 3 degrees Celsius per minute to produce a melting thermogram.
A melt peak position of the seed of around 50 to 53 degrees Celsius may typically be obtainable, when the crystalline seed comprises at least 30 % by weight of BOB. The melting point of polymorphic forms V is about 53 degrees Celsius. The crystalline seed may comprise different SatOSat-triglycerides, such as for example StOSt and BOB, and may thus comprise SatOSat-triglyceride crystals with different melting points, in which case a DSC measurement may display endotherm melt peak positions around 40 to 43 degrees Celsius as well as around 50 to 53 degrees Celsius.

Furthermore, in some embodiments the fat phase may comprise an amount of oils having a relatively low melting point. The heat stable chocolate may also in an embodiment of the invention the fat phase comprises oils with a melting point below 25 degrees Celsius in an amount of 1.0-42% by weight, such as 3.0-35% by weight, such as 3.5-27% by weight or such as 5-20% by weight. Examples of such oils include oils selected from the group consisting of sunflower oil, high oleic sunflower oil, soybean oil, rape seed oil, high oleic rape seed oil, soy oil, olive oil, maize oil, peanut oil, sesame oil, hazelnut oil, almond oil, corn oil, or fractions or mixtures or any combination thereof.

Thus, it should according to some embodiments of the be understood that depending on the desired properties of the heat stable chocolate, the fat phase may comprise for example sunflower oil and/or rape seed oil. These oils may instead of or in addition to being present in the fat phase also be comprised in the crystalline seed. Examples of such oils may e.g. include be high oleic sunflower oil, high oleic safflower oil and high oleic rapeseed oils having a low poly-unsaturated content and a relatively high oxidative stability. One alternative could e.g. be sunflower oil having a higher C18:2 content. Oils with a lower oxidation stability may be less suited.

The invention relates in another aspect to a method of producing a heat stable chocolate, said method comprising the steps of:
a) providing a chocolate composition comprising a fat phase, said fat phase comprising
   60.0 - 99.9% by weight of triglycerides,
   40.0 - 95.0 by weight of triglycerides having C16 - C24 saturated fatty acids in the *sn-1* and *sn-3* positions of the triglyceride and oleic acid in the *sn-2* position of the triglyceride,
   0.01 - 5% by weight of sorbitan ester as an emulsifier not being lecithin,
   wherein said fat phase comprising triglycerides from non-vegetable sources, the triglycerides from non-vegetable sources being selected from the group of triglycerides from sources other than native vegetable oils or fractions thereof, triglycerides obtained after transesterification, and combinations thereof,
b) adjusting the temperature of said chocolate composition to 25-39 degrees Celsius,
c) adding 0.1 -15% by weight of said fat phase of crystalline seed during stirring to produce a seeded chocolate composition,
   wherein said crystalline seed comprises SatOSat-triglycerides in an amount of 40-99.9%, wherein Sat stands for a saturated fatty acid and O stands for oleic acid, wherein an endotherm melt peak position of said crystalline seed is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position, and
d) processing said seeded chocolate composition to obtain said heat stable chocolate.

The crystalline seed may for example be added as crystalline powder, a partly molten suspension, flakes, chips, granules, pellets, drops or a slurry or a combination thereof. The addition of crystalline seed may pose some technical challenges on the process design. In principle, the crystalline seed may be added in any way that can be conveniently integrated in the process design for producing the chocolate.

When providing the chocolate composition, all fat crystals in the composition may be melted. When adjusting the temperature of said chocolate composition, new fat crystals may form and by adding crystalline seed, the formation of more heat-stable crystals may be promoted.

According to another embodiment of the invention adjusting the temperature of said chocolate composition to 25-39 degrees Celsius involves cooling the temperature of said chocolate composition to 25-39 degrees Celsius.

According to another embodiment of the invention, said fat phase may be provided as a fat phase comprising
0.01 - 5% by weight of an emulsifier not being lecithin,
30 - 99.9% by weight of a cocoa butter, a cocoa butter equivalent, cocoa butter improver or combinations thereof.

According to a further embodiment of the invention, said fat phase may be provided as a melted fat phase by melting a chocolate composition comprising a fat phase. For example, in an embodiment of the invention the chocolate composition is melted prior to step b).

The use of a crystalline seed may be combined with employing tempering. Thus, in a further embodiment of the invention the chocolate composition is a tempered chocolate composition.
Thus, it is to be understood that in a method of producing a heat stable chocolate according to an embodiment of the invention, the seed may be added to a tempered chocolate composition at a temperature of 39 degrees Celsius or below, such as at 38 degrees or below. The seed may be added to the tempered chocolate composition at a temperature of 37 degrees Celsius.

According to a still further embodiment of the invention, the method comprises a tempering step. For example, according to one embodiment of the invention the step d) comprises tempering.

According to a further embodiment of the invention said tempering step comprises tempering said chocolate composition provided in step a) to obtain a tempered chocolate composition for step b).

Thus, according to still further embodiments it should be understood that the tempered chocolate composition may be used as the input for step b), i.e. the tempering step is performed after step a), but before step b).

According to a further embodiment of the invention, the step c) comprises tempering before, after and/or during addition of said crystalline seed.

According to an embodiment of the invention said step a) of providing said chocolate composition comprises melting said chocolate composition.

The invention relates in a further aspect to use of the heat stable chocolate according to any of its embodiments or produced by a method according to any of its embodiments for molding, coating, enrobing or filling applications.
The heat stable chocolate according to embodiments of the present invention is useful in any application, where heat stability may be an advantage or an important feature. This may particularly be true for applications where the chocolate is used or stored in environments above ambient temperatures of about 20 degrees Celsius or 25 degrees Celsius.
Especially, if storage temperatures intermittently become very high, such as above about 33 degrees Celsius or above about 35 degrees Celsius or even above about 37 degrees Celsius, for example when the chocolate is stored in a car on a hot summer day, the heat stable chocolate according to embodiments of the invention may perform exceptionally well and preserve a good product when temperatures get lower again and the chocolate is to be consumed.

### Examples

The invention is now illustrated by way of examples.

### Example 1:

### Milk chocolate and Dark chocolates of reference-, comparative- and inventive compositions.

### Preparation of an edible fat comprising enzymatically transesterified StOSt-triglycerides

An initial oil blend was made comprising a high oleic sunflower oil and stearic acid esters, such as for example 30% high oleic sunflower oil and 70% ethyl stearate. The initial oil blend was then subjected to transesterification using an enzyme, such as a lipase, having 1,3-specific transesterification activity. Ester by-products, such as ethyl esters, was then removed from the enzymatically transesterified oil by e.g. distillation or any other suitable method known to someone skilled in the art. The enzymatically transesterified oil was then fractionated, such as solvent fractionated, to produce a StOSt enriched fat. The enzymatically transesterified oil may also be dry fractionated or aqueous detergent fractionated. The StOSt enriched fat was bleached and deodorized to obtain an edible fat comprising enzymatically transesterified StOSt-triglycerides.

### Preparation of an edible fat comprising enzymatically transesterified AOA-triglycerides

Transesterified AOA-triglycerides may be prepared according to the protocol for preparation of an edible fat comprising enzymatically transesterified StOSt-triglycerides given above, in which ethyl stearate is replaced with ethyl arachidate.

### Preparation of an edible fat comprising enzymatically transesterified BOB-triglycerides

Transesterified BOB-triglycerides may be prepared according to the protocol for preparation of an edible fat comprising enzymatically transesterified StOSt-triglycerides given above, in which ethyl stearate is replaced with ethyl behenate.

Tables 2 and 3 below show the recipes and the fat compositions for milk chocolates and dark chocolates, respectively.

Milk chocolates I, II and dark chocolates I, II were each hand tempered on marble table and used to produce 20 gram chocolate bars.

The molten milk chocolates III and IV and dark chocolates III and IV were each stirred at 35 degrees Celsius in an open bowl. The seed, in a slurry like state at 39 degrees Celsius with a mean particle size of approximately 10-20 micrometer, was added to the chocolates and mixed for 15 minutes. Thereafter, the chocolates were poured into 20 gram chocolate bar molds.

The molds were subsequently cooled in a three zones cooling tunnel for a total of 30 minutes, first 10 minutes at a temperature of 15 degrees Celsius, followed by 10 minutes at a temperature at 12 degrees Celsius, followed by 10 minutes at a temperature of 15 degrees Celsius.
Weight percentages in tables 2 and 3 below refer to the total recipe and to the fat composition, respectively.

**Table 1: Triglyceride composition of shea stearin IV 36 and the used enzymatically prepared StOSt source**

| **Fat composition** | **Shea stearin IV 36** | **Enzymatically prepared StOSt source** |
|---|---|---|
| SatOSat (% w/w) | 80.3 | 79.0 |
| StOSt (% w/w) | 67.4 | 66.0 |
| Ratio StOSt/SatOSat | 0.84 | 0.84 |
| Sat2OSat2 (% w/w)* | 71.4 | 69.1 |
| Ratio Sat2OSat2/SatOSat | 0.89 | 0.87 |

| | | |
|---|---|---|
| *Sat2OSat2* = triglycerides having C18* - *C24 saturated fatty acids in the sn-1 and sn-3 positions and oleic acid in the sn-2 position. "Ratio StOSt*/*SatOSat" denotes the weight-ratio between StOSt triglycerides and SatOSat triglycerides, whereas "Ratio Sat2OSat2*/*SatOSat" denotes the weight-ratio between Sat2OSat2 triglycerides and SatOSat triglycerides. The enzymatically transesterified prepared StOSt source may also be referred to as "enzymatic StOSt"* | | |

**Table 2: Recipes and fat compositions for milk chocolates**

| **Recipe (in % w/w)** | Milk Chocolate I (reference) | Milk Chocolate II (comparativ e) | Milk Chocolate III | Milk Chocolate IV |
|---|---|---|---|---|
| Seed | - | - | 1 | 1 |
| Enzymatic StOSt | | 6.2 | 4 | 2 |
| Shea Stearin IV 36 | - | - | - | 2 |
| Cocoa butter | 18 | 11.8 | 13 | 13 |
| Cocoa mass | 16 | 16 | 16 | 16 |
| Sugar | 42.6 | 42.6 | 42 | 42 |
| Whole milk powder | 18 | 18 | 18 | 18 |
| Skim milk powder | 5 | 5 | 5 | 5 |
| Lecithin | 0.4 | 0.4 | 0.4 | 0.4 |
| STS | | | 0.6 | 0.6 |

| Fat composition | | | | |
|---|---|---|---|---|
| Seed slurry (%) | - | - | 3 | 3 |
| Enzymatic StOSt (%) | - | 20 | 12 | 6 |
| Shea Stearin IV 36 (%) | - | - | - | 6 |
| Cocoa butter (%) | 85 | 65 | 70 | 70 |
| Milk fat (%) | 15 | 15 | 15 | 15 |
| Total fat content (% w/w) | 30.9 | 30.9 | 30.9 | 30.9 |

| **The comprised fat composition for chocolate without milk fat (no seed added)** | | | | |
|---|---|---|---|---|
| STS (% w/w) | - | - | 2.0 | 2.0 |
| SatOSat (% w/w) | 82.1 | 81.4 | 81.6 | 81.7 |
| StOSt (% w/w) | 27.1 | 36.0 | 32.8 | 32.9 |
| Ratio StOSt/SatOSat | 0.33 | 0.44 | 0.40 | 0.40 |
| Sat2OSat2* (% w/w)* | 28.9 | 38.1 | 34.8 | 34.9 |
| Ratio Sat2OSat2* / SatOSat | 0.35 | 0.47 | 0.43 | 0.43 |

| **Fat composition of seed** | | | | |
|---|---|---|---|---|
| Enzymatically produced SatOSat (% w/w) | - | - | 79.0 | 79.0 |
| Enzymatically produced StOSt (% w/w) | - | - | 66.0 | 66.0 |
| Ratio StOSt/SatOSat | - | - | 0.84 | 0.84 |
| Sat2OSat2* (% w/w)* | - | - | 69.1 | 69.1 |
| Ratio Sat2OSat2* /SatOSat | - | - | 0.87 | 0.87 |

| | | | | |
|---|---|---|---|---|
| *Sat2OSat2* = triglycerides having C18* - *C24 saturated fatty acids in the sn-1 and sn-3 positions and oleic acid in the sn-2 position.* | | | | |

**Table 3: Recipes and the fat compositions for the dark chocolates. Ratios are not given in %, but as fractions between 0 and 1. Sat2OSat2* = triglycerides having C18 - C24 saturated fatty acids in the sn-1 and sn-3 positions and oleic acid in the sn-2 position.**

| **Recipe (in % w/w)** | Dark Chocolate I (Reference) | Dark Chocolate II (comparative) | Dark Chocolate III | Dark Chocolate IV | Dark Chocolate V | Dark Chocolate VI | Dark Chocolate VII | Dark Chocolate VIII |
|---|---|---|---|---|---|---|---|---|
| Seed | - | - | 1 | 1 | 1 | 3 | 1 | 1 |
| Enzymatic StOSt | - | 6.2 | 4 | 2 | 8 | 4 | 4 | 4 |
| Shea Stearin IV 36 | - | - | - | 2 | - | - | - | - |
| Cocoa butter | 10 | 3.8 | 5 | 5 | 1 | 3 | 5 | 5 |
| Cocoa mass | 39 | 39 | 39 | 39 | 39 | 39 | 39 | 39 |
| Sugar | 50.6 | 50.6 | 50 | 50 | 50 | 50 | 50 | 50 |
| Lecithin | 0.4 | 0.4 | 0.4 | 0.4 | 0.4 | 0.4 | 0.4 | 0.4 |
| STS | - | - | 0.6 | 0.6 | 0.6 | 0.6 | 0.6 | 0.6 |

| **Fat composition** | | | | | | | | |
|---|---|---|---|---|---|---|---|---|
| Seed slurry | - | - | 3 | 3 | 3 | 10 | 3 | 3 |
| Enzymatic StOSt | - | 20 | 12 | 6 | 26 | 12 | 12 | 12 |
| Shea Stearin IV 36 | - | - | - | 6 | - | - | - | - |
| Cocoa butter | 100 | 80 | 85 | 85 | 71 | 78 | 85 | 85 |
| Milk fat | 0 | 0 | 0 | 0 | 0 | 0 | 0 | 0 |
| Total fat content | 31.5 | 31.5 | 31.5 | 31.5 | 31.5 | 31.5 | 31.5 | 31.5 |

| **The comprised fat composition for chocolate without milk fat (no seed added)** | | | | | | | | |
|---|---|---|---|---|---|---|---|---|
| STS | - | - | 2.0 | 2.0 | 2.0 | 2.0 | 2.0 | 2.0 |
| SatOSat | 82.1 | 81.5 | 81.7 | 81.8 | 81.7 | 81.7 | 81.7 | 81.7 |
| StOSt | 27.1 | 34.9 | 31.9 | 32.0 | 37.9 | 31.9 | 31.9 | 31.9 |
| Ratio StOSt/SatOSat | 0.33 | 0.43 | 0.39 | 0.39 | 0.46 | 0.39 | 0.39 | 0.39 |
| Sat2OSat2* | 28.9 | 36.9 | 33.9 | 34.0 | 39.9 | 36.9 | 36.9 | 36.9 |
| Ratio Sat2OSat2* /SatOSat | 0.35 | 0.45 | 0.41 | 0.42 | 0.48 | 0.41 | 0.41 | 0.41 |

| **Seed fat composition (enzymatic StOSt or AOA or BOB)** | | | | | | | | |
|---|---|---|---|---|---|---|---|---|
| SatOSat | - | - | 79.0 | 79.0 | 79.0 | 81.0 | 79.0 | 79.0 |
| StOSt | - | - | 66.0 | 66.0 | 66.0 | 76.0 | - | - |
| AOA | - | - | - | - | - | - | 66.0 | - |
| BOB | - | - | - | - | - | - | | 66.0 |
| Ratio StOSt/SatOSat | - | - | 0.84 | 0.84 | 0.84 | 0.94 | - | - |
| Ratio AOA/SatOSat | - | - | - | - | - | - | 0.84 | - |
| Ratio BOB/SatOSat | - | - | - | - | - | - | - | 0.84 |
| Sat2OSat2* | - | - | 69.1 | 69.1 | 69.1 | 77.0 | 69.1 | 69.1 |
| Ratio Sat2OSat2* /SatOSat | - | - | 0.87 | 0.87 | 0.87 | 0.95 | 0.87 | 0.87 |

The total fat content in the recipe is calculated as the sum of shea stearin, CB, fat content of the cocoa mass (approx. 56% cocoa butter in cocoa mass), milk fat and the fat content of skim milk powder.

Emulsifier not being lecithin (here STS), when added, is thus present in an amount of approx. 2 % by weight of the total fat content.

The seed slurry was manufactured by processing a crystalline seed of example 3 into a seed slurry for use in the above example 1.

### Example 2

### Bloom resistance of chocolate bars of milk- and dark chocolate

After 7 days storage at 20 degrees Celsius chocolate bars from example 1 were placed in a programmable temperature cabinet and subjected to heat treatment at a high temperature for 10 hours followed by a low temperature for 14 hours. This heat treatment were performed either once or five consecutive times. The high temperatures were between 35 to 37 +/- 0.5 degrees Celsius and the low temperatures were between 20 to 25 +/- 0.5 degrees Celsius.

The chocolate bars were examined for bloom after one heat treatment.

Table 4 below illustrates the test result in respect of bloom effect observed for milk chocolate bars of example 1, table 2, after one heat treatment under different high- and low temperature settings.

**Table 4: Bloom on milk chocolate samples**

| **Heat treatment** | Milk Chocolate I (reference) | Milk Chocolate II (comparative) | Milk Chocolate III | Milk Chocolate IV |
|---|---|---|---|---|
| 37 -25 degrees Celsius | - | - | ++ | ++ |
| 37 -24 degrees Celsius | - | - | ++ | ++ |
| 37 -23 degrees Celsius | - | - | ++ | ++ |
| 37 -20 degrees Celsius | - | + | ++ | ++ |
| 35 -25 degrees Celsius | - | - | ++ | ++ |
| 35 -24 degrees Celsius | - | + | ++ | ++ |
| 35 -23 degrees Celsius | - | ++ | ++ | ++ |
| 35 -20 degrees Celsius | - | ++ | ++ | ++ |

| | | | | |
|---|---|---|---|---|
| "++ " *denotes a glossy and un-bloomed chocolate surface* "+" *denotes a dull but un-bloomed chocolate surface* "-" *denotes a bloomed chocolate surface* | | | | |

The data in Table 4 show that Milk Chocolates III and IV exhibit a glossy and un-bloomed chocolate surface after heat treatment under all tested conditions, whereas the reference Milk Chocolate I exhibit a bloomed chocolate surface after one heat treatment regardless of the tested temperatures. The comparative Milk Chocolate II displays a bloomed chocolate surface after one heat treatment of 37 - 25 degrees Celsius, 37 - 24 degrees Celsius, 37 - 23 degrees Celsius and 35 - 25 degrees Celsius. Clearly, Milk Chocolate III and IV display enhanced bloom resistance when compared to both Milk Chocolate I and Milk Chocolate II.

Table 5 below illustrates the test result in respect of bloom effect observed for dark chocolate bars of table 3 after one heat treatment at different high- and low temperature settings.

**Table 5: Bloom on dark chocolate samples**

| **Heat treatment** | Dark Chocolate I (Reference) | Dark Chocolate II (comparative) | Dark Chocolate III | Dark Chocolate IV |
|---|---|---|---|---|
| 37 -25 degrees Celsius | - | - | ++ | ++ |
| 37 -24 degrees Celsius | - | - | ++ | ++ |
| 37 -23 degrees Celsius | - | + | ++ | ++ |
| 37 -20 degrees Celsius | - | ++ | ++ | ++ |
| 35 -25 degrees Celsius | - | + | ++ | ++ |
| 35 -24 degrees Celsius | - | ++ | ++ | ++ |
| 35 -23 degrees Celsius | - | ++ | ++ | ++ |
| 35 -20 degrees Celsius | + | ++ | ++ | ++ |

| | | | | |
|---|---|---|---|---|
| "++" *denotes a glossy and un-bloomed chocolate surface* "+" *denotes a dull but un-bloomed chocolate surface* "-" *denotes a bloomed chocolate surface* | | | | |

The data in Table 5 show that Dark Chocolates III and IV exhibit a glossy and un-bloomed chocolate surface after one heat treatment under all tested temperature conditions, whereas the reference Dark Chocolate I exhibit a bloomed chocolate surface after one heat treatment under all the tested temperatures except the 35 - 20 degrees Celsius heat treatment, where the chocolate surface is dull but un-bloomed. The comparative Dark Chocolate II displays a bloomed chocolate surface after one heat treatment of 37 - 25 degrees Celsius and 37 - 24 degrees Celsius. Clearly, Dark Chocolates III and IV display enhanced bloom resistance when compared to both Dark Chocolate I and Dark Chocolate II.

Furthermore, selections of the un-bloomed chocolate bars of milk chocolates III and IV and dark chocolates III and IV after heat treatments at 37-25 degrees Celsius were placed in bloom cabinets for bloom tests. The samples were tested under isothermal temperature conditions of 20 and 25 degrees Celsius.

Table 6 below illustrates the test result in respect of bloom effect observed for milk and dark chocolate bars after one and five consecutive heat treatments at 37 - 25 degrees Celsius stored at 20 and 25 degrees Celsius isothermal condition.

**Table 6: Bloom data for milk chocolate samples after heat cycle treatments followed by isothermal storage.**

| | Milk Chocolate III | Milk Chocolate IV | Dark Chocolate III | Dark Chocolate IV |
|---|---|---|---|---|
| **Number of weeks until first appearance of bloom** | | | | |
| **One 37 - 25 degrees Celsius heat treatment** | | | | |
| 20 degrees Celsius isotherm. | >26 | >26 | >26 | >26 |
| 25 degrees Celsius isotherm. | >26 | >26 | >26 | >26 |

| **Five 37 - 25 degrees Celsius heat treatments** | | | | |
|---|---|---|---|---|
| 20 degrees Celsius isotherm. | >26 | >26 | >26 | >26 |
| 25 degrees Celsius isotherm. | >26 | >26 | >26 | >26 |

The data in table 6 show that samples of Milk Chocolate III and IV and Dark Chocolate III and IV are resistant to bloom formation for at least 26 weeks after one heat cycle treatment followed by isothermal storage at either 20 degrees Celsius or 25 degrees Celsius. Samples of Milk Chocolates III and IV and Dark Chocolates III and IV are even resistant to bloom formation for at least 26 weeks after five consecutive heat treatments i.e. heat cycle treatment followed by isothermal storage at either 20 degrees Celsius or 25 degrees Celsius.

### Example 3

### Crystalline seed

A crystalline seed in the form of seed flakes were produced from Shea Stearin IV 36. The Shea Stearin IV 36 was subjected to a crystallization zone CZ, where the crystallization zone was provided in a Scraped Surface Heat Exchanger. The Scraped Surface Heat Exchanger has an initial feed tank, from where the Shea Stearin IV 36 was fed through three subsequent temperature zones, A1, A2, and A3. The parameters and settings of the Scraped Surface Heat Exchanger and measured slurry temperatures are listed in table 7.

**Table 7: Settings of the Scraped Surface Heat Exchanger. Note that "Off" denotes no active temperature control in the given step, where ambient temperature was about 20 degrees Celsius.**

| **Scraped Surface Heat Exchanger** | |
|---|---|
| Feed tank temperature (degrees Celsius) | 62.3 |
| Product flow (kilogram per hour) | 80 |
| Total retention time in Scraped Surface Heat Exchanger | 25.8 |
| Scraped Surface Heat Exchanger rotational speed (Rotations per minute) | 800 |
| Temperature of cooling jacket of A1 (degrees Celsius) | 10 |
| Slurry temperature at outlet from A1 (degrees Celsius) | 29.3 |
| Temperature of cooling jacket of A2 (degrees Celsius) | 0 |
| Slurry temperature at outlet from A2 (degrees Celsius) | 22.6 |
| Temperature of cooling jacket of A3 (degrees Celsius) | Off / 20 |
| Slurry temperature at outlet from A3 (degrees Celsius) | 25.7 |

The obtained product from the Scraped Surface Heat Exchanger was subjected to a transformation zone to obtain a transformed edible fat. The transformation zone comprised a transformation tank, a stirrer, and a temperature controller. The crystallization zone was operated according to the parameters and settings as given in table 8.

**Table 8: Settings of the Transformation Zone TZ.**

| **Settings of the Transformation Zone TZ.** | |
|---|---|
| Transformation tank capacity (liters) | 30 |
| Transformation tank stirring speed (Rotations per minute) | 35 |
| Transformation tank temperature (degrees Celsius) | 39.5 |
| Retention time in transformation zone (hours) | 25 |

The transformed edible fat extracted from the transformation zone output was subjected to particulation in a particulation zone to obtain samples of crystalline seed in the form of seed flakes. The particulation zone comprised a drum having a controllable drum surface temperature. The particulation zone was operated according to the parameters and settings as given in table 9.

**Table 9: Settings of the particulation zone.**

| **Settings of the particulation zone** | |
|---|---|
| Flaker capacity (kilogram per hour) | 10 |
| Flaker drum surface temperature (degrees Celsius) | -14 |
| Temperature of HSC slurry immediately prior to flaking (S5 , S6) (degrees Celsius) | 39.5 |
| Contact time slurry on flaker (seconds) | 3 |

### Crystalline seed with AOA

A crystalline seed in the form of seed flakes may be produced according to example 3, in which Shea Stearin IV 36 is replaced with transesterified AOA.

### Crystalline seed BOB

A crystalline seed in the form of seed flakes may be produced according to example 3, in which Shea Stearin IV 36 is replaced with transesterified BOB.

## Claims

1. A heat stable chocolate comprising a fat phase, said fat phase of said heat stable chocolate comprising:
60.0 - 99.9 % by weight of triglycerides,
40.0 - 95.0 % by weight of triglycerides having C16 - C24 saturated fatty acids in the *sn-1* and *sn-3* positions of the triglyceride and oleic acid in the *sn-2* position of the triglyceride,
0.01 - 5% by weight of sorbitan ester as an emulsifier not being lecithin,
0.1 - 15% by weight of crystalline seed,
wherein said crystalline seed comprises SatOSat-triglycerides in an amount of 40-99.9%, wherein Sat stands for a saturated fatty acid and O stands for oleic acid,
wherein an endotherm melt peak position of said crystalline seed is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position,
wherein said fat phase comprises triglycerides from non-vegetable sources, said triglycerides from non-vegetable sources being selected from the group of triglycerides from sources other than native vegetable oils or fractions thereof, triglycerides obtained after transesterification, and combinations thereof, and
wherein the heat stable chocolate is obtainable by a method comprising the steps of
a) providing a chocolate composition comprising said fat phase,
b) adjusting the temperature of said chocolate composition to 25-39 degrees Celsius,
c) adding said crystalline seed during stirring to produce a seeded chocolate composition, and
d) processing said seeded chocolate composition to obtain said heat stable chocolate.

2. The heat stable chocolate according to claim 1, wherein said fat phase has a weight-ratio between
- triglycerides having C18 - C24 saturated fatty acids in the sn-1 and sn-3 positions of the triglyceride and oleic acid in the sn-2 position of the triglyceride, and
- triglycerides having C16 - C24 saturated fatty acids in the sn-1 and sn-3 positions of the triglyceride and oleic acid in the sn-2 position of the triglyceride,
which is between 0.40 and 0.99, such as between 0.40 and 0.95, such as between 0.40 and 0.90, such as between 0.40 and 0.80, such as between 0.40 and 0.70, such as between 0.40 and 0.60, such as between 0.40and 0.50.

3. The heat stable chocolate according to claim 1 or 2, wherein said fat phase has a weight-ratio between
- triglycerides having C18 saturated fatty acids in the sn-1 and sn-3 positions of the triglyceride and oleic acid in the sn-2 position of the triglyceride, and
- triglycerides having C16 - C18 saturated fatty acids in the sn-1 and sn-3 positions of the triglyceride and oleic acid in the sn-2 position of the triglyceride,
which is between 0.40 and 0.99, such as between 0.40 and 0.95, such as between 0.40 and 0.90, such as between 0.40 and 0.80, such as between 0.40 and 0.70, such as between 0.40 and 0.60, such as between 0.40 and 0.50.

4. The heat stable chocolate according to any of the claims 1-3, wherein said crystalline seed comprises SatOSat-triglycerides in an amount of 40 - 99% by weight of said crystalline seed, such as 50 - 99%, such as 60 - 99, such as 70-98%, wherein Sat stands for a saturated fatty acid and O stands for oleic acid.

5. The heat stable chocolate according to any of the claims 1-4, wherein said crystalline seed comprises 40 - 99 % by weight of StOSt-triglycerides, such as 50 - 99 % by weight, such as 70 - 99 % by weight, such as 80 - 99 % by weight, and wherein St stands for stearic acid and O stands for oleic acid.

6. The heat stable chocolate according to any of the claims 1-5, wherein said crystalline seed has a weight-ratio between
- triglycerides having C18 - C24 saturated fatty acids in the sn-1 and sn-3 positions of the triglyceride and oleic acid in the sn-2 position of the triglyceride, and
- triglycerides having C16 - C24 saturated fatty acids in the sn-1 and sn-3 positions of the triglyceride and oleic acid in the sn-2 position of the triglyceride,
which is between 0.40 and 0.99, such as between 0.45 and 0.99, such as between 0.50 and 0.99, such as between 0.55 and 0.99, such as between 0.60 and 0.99, such as between 0.65 and 0.99, such as between 0.70 and 0.99.

7. The heat stable chocolate according to any of the claims 1-6, wherein said crystalline seed has a weight-ratio between
- triglycerides having C18 saturated fatty acids in the sn-1 and sn-3 positions of the triglyceride and oleic acid in the sn-2 position of the triglyceride, and
- triglycerides having C16 - C18 saturated fatty acids in the sn-1 and sn-3 positions of the triglyceride and oleic acid in the sn-2 position of the triglyceride,
which is between 0.40 and 0.99, such as between 0.45 and 0.99, such as between 0.50 and 0.99, such as between 0.55 and 0.99, such as between 0.60 and 0.99, such as between 0.65 and 0.99, such as between 0.70 and 0.99.

8. The heat stable chocolate according to any of the claims 1-7, wherein said fat phase comprises triglycerides obtained by transesterification in an amount of 0.1-99.9% by weight of said fat phase, such as 1-20%, such as 2-15%, such as 3-10%.

9. The heat stable chocolate according to any of the claims 1-8, wherein said crystalline seed comprises SatOSat-triglycerides obtained by transesterification in an amount of 0.01-99.9% by weight, such as 20-99%, such as 40-99%, such as 70-99%.

10. The heat stable chocolate according to any of the claims 8-9, wherein the triglycerides obtained by transesterification are produced from an edible fat and a saturated fatty acid source under the influence of enzymes having 1,3-specific transesterification activity.

11. The heat stable chocolate according to claim 10, wherein the edible fat used for transesterification comprises a vegetable fat selected from a group consisting of fats obtained from shea, sunflower, soy, rapeseed, sal, safflower, palm, soy, kokum, illipe, mango, mowra, cupuacu and any fraction and any combination thereof, such as wherein the edible fat used for transesterification comprises or consists of high oleic sunflower, high oleic safflower oil, high oleic rapeseed oil or any combination thereof.

12. The heat stable chocolate according to any of the claims 10-11, wherein the edible fat used for transesterification comprises or consists of a shea olein or a shea olein fraction.

13. The heat stable chocolate according to any of the claims 1-12, wherein said fat phase comprises triglycerides obtained from unicellular organisms in an amount of 0.1-99.9% by weight of said fat phase, such as 1-20%, such as 1-15%, such as 2-10%, such as 5-10%.

14. The heat stable chocolate according to any of the claims 1-13, wherein said sorbitan ester comprises or is sorbitan-tri-stearate.

15. The heat stable chocolate according to any of the claims 1-14, wherein said heat stable chocolate comprises lecithin.

16. The heat stable chocolate according to any of claims 1-15, wherein said fat phase comprises fat obtained from shea, sal, kokum, illipe, mango, mowra, cupuacu, allanblackia, pentadesma, any fraction or any combination thereof.

17. The heat stable chocolate according to any of the claims 1-16, wherein said fat phase further comprises 0.1% - 42.9% by weight of fat components being selected from the group comprising milk fat, triglycerides wherein at least one of the *sn-1* and *sn-3* positions of the triglyceride is occupied by a fatty acid different from C16 - C24 saturated fatty acid, triglycerides wherein the *sn-2* position is occupied by a fatty acid different from oleic acid, asymmetrical triglycerides, and any combination thereof, such as 1 - 20% by weight, such as 2 - 15% by weight, such as 3 - 10% by weight.

18. The heat stable chocolate according to any of the claims 1-17, wherein said fat phase comprises oils with a melting point below 25 degrees Celsius in an amount of 1.0-42% by weight, such as 3.0-35% by weight, such as 3.5-27% or such as 5-20% by weight.

19. A method of producing a heat stable chocolate, said method comprising the steps of:
a) providing a chocolate composition comprising a fat phase, said fat phase comprising
60.0 - 99.9% by weight of triglycerides,
40.0 - 95.0 by weight of triglycerides having C16 - C24 saturated fatty acids in the *sn-1* and *sn-3* positions of the triglyceride and oleic acid in the *sn-2* position of the triglyceride,
0.01 - 5% by weight of sorbitan ester as an emulsifier not being lecithin,
wherein said fat phase comprising triglycerides from non-vegetable sources, the triglycerides from non-vegetable sources being selected from the group of triglycerides from sources other than native vegetable oils or fractions thereof, triglycerides obtained after transesterification, and combinations thereof,
b) adjusting the temperature of said chocolate composition to 25-39 degrees Celsius,
c) adding 0.1 -15% by weight of said fat phase of crystalline seed during stirring to produce a seeded chocolate composition,
wherein said crystalline seed comprises SatOSat-triglycerides in an amount of 40-99.9%, wherein Sat stands for a saturated fatty acid and O stands for oleic acid,
wherein an endotherm melt peak position of said crystalline seed is about 40 degrees Celsius or higher when measured by Differential Scanning Calorimetry by heating samples of 40 +/- 4 mg of crystalline seed from 30 degrees Celsius to 65 degrees Celsius at a rate of 3 degrees Celsius per minute to produce a melting thermogram defining said endotherm melt peak position, and
d) processing said seeded chocolate composition to obtain said heat stable chocolate.

20. The method of producing a heat stable chocolate according to claim 19, wherein said chocolate composition is melted prior to step b).

21. The method of producing a heat stable chocolate according to claim 19 or 20, wherein said chocolate composition is a tempered chocolate composition.

22. The method according to any of claims 19-21, wherein said method comprises a tempering step.

23. Use of the heat stable chocolate according to any of the claims 1-18 or the heat stable chocolate obtainable by the method according to any of the claims 19 - 22 for molding, coating, enrobing or filling applications.

## Patentansprüche

1. Hitzestabile Schokolade, die eine Fettphase umfasst, wobei die Fettphase der hitzestabilen Schokolade folgendes umfasst:
60,0 bis 99,9 Gew.-% Triglyceride,
40,0 bis 95,0 Gew.-% Triglyceride mit C16 bis C24 gesättigten Fettsäuren an den *sn-1* und *sn-3* Positionen des Triglycerids und Ölsäure an der *sn-2* Position des Triglycerids,
0,01 bis 5 Gew.-% Sorbitanester als ein Emulgator, der nicht Lecithin ist,
0,1 bis 15 Gew.-% Kristallisationskeime,
wobei die Kristallisationskeime SatOSat-Triglyceride in einer Menge von 40 bis 99,9 % umfassen, wobei Sat für eine gesättigte Fettsäure steht, und wobei O für Ölsäure steht,
wobei eine endotherme Schmelzpeakposition der Kristallisationskeime gemessen durch dynamische Differenzkalorimetrie etwa 40 Grad Celsius oder höher ist durch Erhitzen von 40 +/- 4 mg Kristallisationskeime von 30 Grad Celsius auf 65 Grad Celsius mit einer Rate von 3 Grad Celsius pro Minute, um ein Schmelzthermogramm zu erzeugen, das die endotherme Schmelzpeakposition definiert,
wobei die Fettphase Triglyceride aus nichtpflanzlichen Quellen umfasst, wobei die Triglyceride aus nichtpflanzlichen Quellen ausgewählt sind aus der Gruppe von Triglyceriden aus anderen Quellen als nativen Pflanzenölen oder Teilen dieser, nach Umesterung erhaltenen Triglyceriden und Kombination davon, und
wobei die hitzestabile Schokolade durch ein Verfahren erhalten werden kann, das die folgenden Schritte umfasst:
a) Bereitstellen einer Schokoladenzusammensetzung, welche die Fettphase umfasst,
b) Anpassen der Temperatur der Schokoladenzusammensetzung auf 25 bis 39 Grad Celsius,
c) Zugeben der Kristallisationskeime unter Rühren, um eine mit Kristallisationsnukleator versetzte Schokoladenzusammensetzung zu erzeugen, und
d) Verarbeiten der eine mit Kristallisationsnukleator versetzten Schokoladenzusammensetzung, um die hitzestabile Schokolade zu erhalten.

2. Hitzestabile Schokolade nach Anspruch 1, wobei die Fettphase ein Gewichtsverhältnis aufweist zwischen
- Triglyceriden mit C18 bis C24 gesättigten Fettsäuren an den sn-1 und sn-3 Positionen des Triglycerids und Ölsäure an der sn-2 Position des Triglycerids, und
- Triglyceriden mit C16 bis C24 gesättigten Fettsäuren an den sn-1 und sn-3 Positionen des Triglycerids und Ölsäure an der sn-2 Position des Triglycerids,
das zwischen 0,40 und 0,99 liegt, wie etwa zwischen 0,40 und 0,95, wie etwa zwischen 0,40 und 0,90, wie etwa zwischen 0,40 und 0,80, wie etwa zwischen 0,40 und 0,70, wie etwa zwischen 0,40 und 0,60, wie etwa zwischen 0,40 und 0,50.

3. Hitzestabile Schokolade nach Anspruch 1 oder 2, wobei die Fettphase ein Gewichtsverhältnis aufweist zwischen
- Triglyceriden mit C18 gesättigten Fettsäuren an den sn-1 und sn-3 Positionen des Triglycerids und Ölsäure an der sn-2 Position des Triglycerids, und
- Triglyceriden mit C16 bis C18 gesättigten Fettsäuren an den sn-1 und sn-3 Positionen des Triglycerids und Ölsäure an der sn-2 Position des Triglycerids,
das zwischen 0,40 und 0,99 liegt, wie etwa zwischen 0,40 und 0,95, wie etwa zwischen 0,40 und 0,90, wie etwa zwischen 0,40 und 0,80, wie etwa zwischen 0,40 und 0,70, wie etwa zwischen 0,40 und 0,60, wie etwa zwischen 0,40 und 0,50.

4. Hitzestabile Schokolade nach einem der Ansprüche 1 bis 3, wobei die Kristallisationskeime SatOSat-Triglyceride in einer Menge von 40 bis 99 % des Gewichts der Kristallisationskeime umfassen, wie etwa 50 bis 99 %, wie etwa 60 bis 99 %, wie etwa 70 bis 98 %, wobei Sat für eine gesättigte Fettsäure steht, und wobei O für Ölsäure steht.

5. Hitzestabile Schokolade nach einem der Ansprüche 1 bis 4, wobei die Kristallisationskeime StOSt-Triglyceride in einer Menge von 40 bis 99 % Gew.-% umfassen, wie etwa 50 bis 99 Gew.-%, wie etwa 70 bis 99 Gew.-%, wie etwa 80 bis 99 Gew.-%, wobei St für ein Stearinsäure steht, und wobei O für Ölsäure steht.

6. Hitzestabile Schokolade nach einem der Ansprüche 1 bis 5, wobei die Kristallisationskeime ein Gewichtsverhältnis aufweisen zwischen
- Triglyceriden mit C18 bis C24 gesättigten Fettsäuren an den sn-1 und sn-3 Positionen des Triglycerids und Ölsäure an der sn-2 Position des Triglycerids, und
- Triglyceriden mit C16 bis C24 gesättigten Fettsäuren an den sn-1 und sn-3 Positionen des Triglycerids und Ölsäure an der sn-2 Position des Triglycerids,
das zwischen 0,40 und 0,99 liegt, wie etwa zwischen 0,45 und 0,99, wie etwa zwischen 0,50 und 0,99, wie etwa zwischen 0,55 und 0,99, wie etwa zwischen 0,60 und 0,99, wie etwa zwischen 0,65 und 0,99, wie etwa zwischen 0,70 und 0,99.

7. Hitzestabile Schokolade nach einem der Ansprüche 1 bis 6, wobei die Kristallisationskeime ein Gewichtsverhältnis aufweisen zwischen
- Triglyceriden mit C18 gesättigten Fettsäuren an den sn-1 und sn-3 Positionen des Triglycerids und Ölsäure an der sn-2 Position des Triglycerids, und
- Triglyceriden mit C16 bis C18 gesättigten Fettsäuren an den sn-1 und sn-3 Positionen des Triglycerids und Ölsäure an der sn-2 Position des Triglycerids,
das zwischen 0,40 und 0,99 liegt, wie etwa zwischen 0,45 und 0,99, wie etwa zwischen 0,50 und 0,99, wie etwa zwischen 0,55 und 0,99, wie etwa zwischen 0,60 und 0,99, wie etwa zwischen 0,65 und 0,99, wie etwa zwischen 0,70 und 0,99.

8. Hitzestabile Schokolade nach einem der Ansprüche 1 bis 7, wobei die Fettphase durch Umesterung erhaltene Triglyceride umfasst, in einer Menge von 0,1 bis 99,9 Gew.-% der Fettphase, wie etwa 1 bis 20 %, wie etwa 2 bis 15 %, wie etwa 3 bis 10 %.

9. Hitzestabile Schokolade nach einem der Ansprüche 1 bis 8, wobei die Kristallisationskeime durch Umesterung erhaltene SatOSat-Triglyceride umfassen, in einer Menge von 0,01 bis 99,9 Gew.-%, wie etwa 20 bis 99 %, wie etwa 40 bis 99 %, wie etwa 70 bis 99 %.

10. Hitzestabile Schokolade nach einem der Ansprüche 8 bis 9, wobei die durch Umesterung erhaltenen Triglyceride aus Speisefett und einer gesättigten Fettsäurequelle erhalten werden unter dem Einfluss von Enzymen mit 1,3-spezifischer Umesterungsaktivität.

11. Hitzestabile Schokolade nach Anspruch 10, wobei das für die Umesterung verwendete Speisefett ein Pflanzenfett umfasst, das ausgewählt ist aus der Gruppe, die Fette umfasst, die erhalten werden aus Sheanuss, Sonnenblumen, Soja, Raps, Salbaum, Disteln, Palmen, Soja, Kokum, Illipe, Mango, Mowra, Cupuacu und jedem Teil und jeder Kombination dieser, wobei ein für die Umesterung verwendetes Speisefett etwa folgendes umfasst oder daraus besteht: Sonnenblumenöl mit hohem Fettsäuregehalt, Distelöl mit hohem Fettsäuregehalt, Rapsöl mit hohem Fettsäuregehalt oder eine bzw. einer beliebigen Kombination dieser.

12. Hitzestabile Schokolade nach einem der Ansprüche 10 bis 11, wobei das für die Umesterung verwendete Speisefett Sheaöl umfasst oder einen Sheaölanteil aufweist.

13. Hitzestabile Schokolade nach einem der Ansprüche 1 bis 12, wobei die Fettphase aus einzelligen Organismen erhaltene Triglyceride in einer Menge von 0,1 bis 99,9 Gew.-% der Fettphase umfasst, wie etwa 1 bis 20 %, wie etwa 1 bis 15 %, wie etwa 2 bis 10 %, wie etwa 5 bis 10 %.

14. Hitzestabile Schokolade nach einem der Ansprüche 1 bis 13, wobei der Sorbitanester Sorbitantristearat umfasst oder ist.

15. Hitzestabile Schokolade nach einem der Ansprüche 1 bis 14, wobei die hitzestabile Schokolade Lecithin umfasst.

16. Hitzestabile Schokolade nach einem der Ansprüche 1 bis 15, wobei die Fettphase Fett umfasst, das ausgewählt ist aus der Gruppe, die Fette umfasst, die erhalten werden aus Sheanuss, Salbaum, Kokum, Illipe, Mango, Mowra, Cupuacu, Allanblackia, Pentadesma, jedem Anteil oder jeder Kombination dieser.

17. Hitzestabile Schokolade nach einem der Ansprüche 1 bis 16, wobei die Fettphase ferner 0,1 Gew.-% bis 42,9 Gew.-% der Fettbestandteile umfasst, die ausgewählt sind aus der Gruppe bestehend aus: Milchfett, Triglyceriden, wobei mindestens eine der *sn-1* und *sn-3* Positionen des Triglycerids durch eine Fettsäure belegt ist, die sich von C16 - C24 gesättigter Fettsäure unterscheidet, Triglyceriden, wobei die sn-2 Position belegt ist durch eine sich von Ölsäure unterscheidenden Fettsäure, asymmetrischen Triglyceriden und jeder Kombination dieser, wie etwa 1 bis 20 Gew.-%, wie etwa 2 bis 15 Gew.-%, wie etwa 3 bis 10 Gew.-%.

18. Hitzestabile Schokolade nach einem der Ansprüche 1 bis 17, wobei die Fettphase Öle mit einem Schmelzpunkt von unter 25 Grad Celsius in einer Menge von 1,0 bis 42 Gew.-% umfasst, wie etwa 3,0 bis 35 Gew.-%, wie etwa 3,5 bis 27 % oder wie etwa 5 bis 20 Gew.-%.

19. Verfahren zur Herstellung hitzestabiler Schokolade, wobei das Verfahren die folgenden Schritte umfasst:
a) Bereitstellen einer Schokoladenzusammensetzung, die eine Fettphase umfasst, wobei die Fettphase folgendes umfasst:
60,0 bis 99,9 Gew.-% Triglyceride,
40,0 bis 95,0 Gew.-% Triglyceride mit C16 bis C24 gesättigten Fettsäuren an den *sn-1* und *sn-3* Positionen des Triglycerids und Ölsäure an der *sn-2* Position des Triglycerids,
0,01 bis 5 Gew.-% Sorbitanester als ein Emulgator, der nicht Lecithin ist,
wobei die Fettphase Triglyceride aus nichtpflanzlichen Quellen umfasst, wobei die Triglyceride aus nichtpflanzlichen Quellen ausgewählt sind aus der Gruppe von Triglyceriden aus anderen Quellen als nativen Pflanzenölen oder Teilen dieser, nach Umesterung erhaltenen Triglyceriden und Kombination davon,
b) Anpassen der Temperatur der Schokoladenzusammensetzung auf 25 bis 39 Grad Celsius,
c) Zugeben von Kristallisationskeimen in Höhe von 0,1 bis 15 Gew.-% der Fettphase unter Rühren, um eine mit Kristallisationsnukleator versetzte Schokoladenzusammensetzung zu erzeugen,
wobei die Kristallisationskeime SatOSat-Triglyceride in einer Menge von 40 bis 99,9 % umfassen, wobei Sat für eine gesättigte Fettsäure steht, und wobei O für Ölsäure steht,
wobei eine endotherme Schmelzpeakposition der Kristallisationskeime gemessen durch dynamische Differenzkalorimetrie etwa 40 Grad Celsius oder höher ist durch Erhitzen von 40 +/- 4 mg Kristallisationskeime von 30 Grad Celsius auf 65 Grad Celsius mit einer Rate von 3 Grad Celsius pro Minute, um ein Schmelzthermogramm zu erzeugen, das die endotherme Schmelzpeakposition definiert, und
d) Verarbeiten der eine mit Kristallisationsnukleator versetzten Schokoladenzusammensetzung, um die hitzestabile Schokolade zu erhalten.

20. Verfahren zur Herstellung hitzestabiler Schokolade nach Anspruch 19, wobei die Schokoladenzusammensetzung vor dem Schritt b) geschmolzen wird.

21. Verfahren zur Herstellung hitzestabiler Schokolade nach Anspruch 19 oder 20, wobei die Schokoladenzusammensetzung eine temperierte Schokoladenzusammensetzung ist.

22. Verfahren nach einem der Ansprüche 19 bis 21, wobei das Verfahren einen Temperierungsschritt umfasst.

23. Verwendung der hitzestabilen Schokolade nach einem der Ansprüche 1 bis 18 oder der durch das Verfahren nach einem der Ansprüche 19 bis 22 erzeugbaren hitzestabilen Schokolade für Anwendungen des Formens, des Beschichtens, des Überziehens oder des Füllens.

## Revendications

1. Chocolat stable à la chaleur comprenant une phase grasse, ladite phase grasse dudit chocolat stable à la chaleur comprenant :
de 60,0 à 99,9 % en poids de triglycérides,
de 40,0 à 95,0 % en poids de triglycérides ayant des acides gras saturés en C16 à C24 aux positions sn-1 et *sn-3* du triglycéride et de l'acide oléique à la position *sn-2* du triglycéride,
de 0,01 à 5 % en poids d'ester de sorbitane comme émulsifiant, autre que la lécithine,
de 0,1 à 15 % en poids de germe cristallin,
ledit germe cristallin comprenant des SatOSat-triglycérides en une quantité de 40 à 99,9 %, Sat représentant un acide gras saturé et O représentant l'acide oléique,
une position de pic de fusion endothermique dudit germe cristallin étant d'environ 40 degrés Celsius ou plus lorsqu'elle est mesurée par calorimétrie différentielle à balayage en chauffant des échantillons de 40 +/- 4 mg de germe cristallin de 30 degrés Celsius à 65 degrés Celsius à une vitesse de 3 degrés Celsius par minute pour produire un thermogramme de fusion définissant ladite position de pic de fusion endothermique,
ladite phase grasse comprenant des triglycérides provenant de sources non végétales, lesdits triglycérides provenant de sources non végétales étant choisis dans le groupe des triglycérides provenant de sources autres que les huiles végétales natives ou des fractions de celles-ci, des triglycérides obtenus après transestérification, et des combinaisons de ceux-ci, et
le chocolat stable à la chaleur pouvant être obtenu par un procédé comprenant les étapes consistant à
a) fournir une composition de chocolat comprenant ladite phase grasse,
b) ajuster la température de ladite composition de chocolat à 25 à 39 degrés Celsius,
c) ajouter ledit germe cristallin pendant l'agitation pour produire une composition de chocolat ensemencée, et
d) traiter ladite composition de chocolat ensemencée pour obtenir ledit chocolat stable à la chaleur.

2. Chocolat stable à la chaleur selon la revendication 1, ladite phase grasse ayant un rapport pondéral entre
- des triglycérides ayant des acides gras saturés en C18 à C24 aux positions sn-1 et sn-3 du triglycéride et de l'acide oléique à la position sn-2 du triglycéride, et
- des triglycérides ayant des acides gras saturés en C16 à C24 aux positions sn-1 et sn-3 du triglycéride et de l'acide oléique à la position sn-2 du triglycéride,
qui est compris entre 0,40 et 0,99, par exemple entre 0,40 et 0,95, par exemple entre 0,40 et 0,90, par exemple entre 0,40 et 0,80, par exemple entre 0,40 et 0,70, par exemple entre 0,40 et 0,60, par exemple entre 0,40 et 0,50.

3. Chocolat stable à la chaleur selon la revendication 1 ou 2, ladite phase grasse ayant un rapport pondéral entre
- des triglycérides ayant des acides gras saturés en C18 aux positions sn-1 et sn-3 du triglycéride et de l'acide oléique à la position sn-2 du triglycéride, et
- des triglycérides ayant des acides gras saturés en C16 à C18 aux positions sn-1 et sn-3 du triglycéride et de l'acide oléique à la position sn-2 du triglycéride,
qui est compris entre 0,40 et 0,99, par exemple entre 0,40 et 0,95, par exemple entre 0,40 et 0,90, par exemple entre 0,40 et 0,80, par exemple entre 0,40 et 0,70, par exemple entre 0,40 et 0,60, par exemple entre 0,40 et 0,50.

4. Chocolat stable à la chaleur selon l'une quelconque des revendications 1 à 3, ledit germe cristallin comprenant des SatOSat-triglycérides en une quantité de 40 à 99 % en poids dudit germe cristallin, par exemple de 50 à 99 %, par exemple de 60 à 99 %, par exemple de 70 à 98 %, Sat représentant un acide gras saturé et O représentant l'acide oléique.

5. Chocolat stable à la chaleur selon l'une quelconque des revendications 1 à 4, ledit germe cristallin comprenant de 40 à 99 % en poids de StOSt-triglycérides, par exemple de 50 à 99 % en poids, par exemple de 70 à 99 % en poids, par exemple de 80 à 99 % en poids, et St représentant l'acide stéarique et O représentant l'acide oléique.

6. Chocolat stable à la chaleur selon l'une quelconque des revendications 1 à 5, ledit germe cristallin ayant un rapport pondéral entre
- des triglycérides ayant des acides gras saturés en C18 à C24 aux positions sn-1 et sn-3 du triglycéride et de l'acide oléique à la position sn-2 du triglycéride, et
- des triglycérides ayant des acides gras saturés en C16-C24 aux positions sn-1 et sn-3 du triglycéride et de l'acide oléique à la position sn-2 du triglycéride,
qui est compris entre 0,40 et 0,99, par exemple entre 0,45 et 0,99, par exemple entre 0,50 et 0,99, par exemple entre 0,55 et 0,99, par exemple entre 0,60 et 0,99, par exemple entre 0,65 et 0,99, par exemple entre 0,70 et 0,99.

7. Chocolat stable à la chaleur selon l'une quelconque des revendications 1 à 6, ledit germe cristallin ayant un rapport pondéral entre
- des triglycérides ayant des acides gras saturés en C18 aux positions sn-1 et sn-3 du triglycéride et de l'acide oléique à la position sn-2 du triglycéride, et
- des triglycérides ayant des acides gras saturés en C16 à C18 aux positions sn-1 et sn-3 du triglycéride et de l'acide oléique à la position sn-2 du triglycéride,
qui est compris entre 0,40 et 0,99, par exemple entre 0,45 et 0,99, par exemple entre 0,50 et 0,99, par exemple entre 0,55 et 0,99, par exemple entre 0,60 et 0,99, par exemple entre 0,65 et 0,99, par exemple entre 0,70 et 0,99.

8. Chocolat stable à la chaleur selon l'une quelconque des revendications 1 à 7, ladite phase grasse comprenant des triglycérides obtenus par transestérification en une quantité de 0,1 à 99,9 % en poids de ladite phase grasse, par exemple de 1 à 20 %, par exemple de 2 à 15 %, par exemple de 3 à 10 %.

9. Chocolat stable à la chaleur selon l'une quelconque des revendications 1 à 8, ledit germe cristallin comprenant des SatOSat-triglycérides obtenus par transestérification en une quantité de 0,01 à 99,9 % en poids, par exemple de 20 à 99 %, par exemple de 40 à 99 %, par exemple de 70 à 99 %.

10. Chocolat stable à la chaleur selon la revendication 8 ou 9, les triglycérides obtenus par transestérification étant produits à partir d'une graisse comestible et d'une source d'acide gras saturé sous l'influence d'enzymes ayant une activité de transestérification spécifique en 1,3.

11. Chocolat stable à la chaleur selon la revendication 10, la graisse comestible utilisée pour la transestérification comprenant une graisse végétale choisie dans un groupe constitué de graisses obtenues à partir de karité, tournesol, soja, colza, sal, carthame, palme, soja, kokum, illipe, mangue, mowra, cupuacu et toute fraction et toute combinaison de ceux-ci, de sorte que la graisse comestible utilisée pour la transestérification comprenne ou consiste en de l'huile de tournesol à haute teneur en acide oléique, de l'huile de carthame à haute teneur en acide oléique, de l'huile de colza à haute teneur en acide oléique ou toute combinaison de celles-ci.

12. Chocolat stable à la chaleur selon la revendication 10 ou 11, la graisse comestible utilisée pour la transestérification comprenant ou consistant en une oléine de karité ou une fraction d'oléine de karité.

13. Chocolat stable à la chaleur selon l'une quelconque des revendications 1 à 12, ladite phase grasse comprenant des triglycérides obtenus à partir d'organismes unicellulaires en une quantité de 0,1 à 99,9 % en poids de ladite phase grasse, par exemple de 1 à 20 %, par exemple de 1 à 15 %, par exemple de 2 à 10 %, par exemple de 5 à 10%.

14. Chocolat stable à la chaleur selon l'une quelconque des revendications 1 à 13, ledit ester de sorbitane comprenant ou étant un tri-stéarate de sorbitane.

15. Chocolat stable à la chaleur selon l'une quelconque des revendications 1 à 14, ledit chocolat stable à la chaleur comprenant de la lécithine.

16. Chocolat stable à la chaleur selon l'une quelconque des revendications 1 à 15, ladite phase grasse comprenant une graisse obtenue à partir de karité, sal, kokum, illipe, mangue, mowra, cupuacu, allanblackia, pentadesma, toute fraction ou toute combinaison de ceux-ci.

17. Chocolat stable à la chaleur selon l'une quelconque des revendications 1 à 16, ladite phase grasse comprenant en outre 0,1 % à 42,9 % en poids de composants gras choisis dans le groupe comprenant la matière grasse du lait, des triglycérides, au moins l'une des positions sn-1 et *sn-3* du triglycéride étant occupée par un acide gras différent d'un acide gras saturé en C16 à C24, des triglycérides, la position sn-2 étant occupée par un acide gras différent de l'acide oléique, des triglycérides asymétriques et toute combinaison de ceux-ci, par exemple de 1 à 20 % en poids, par exemple de 2 à 15 % en poids, par exemple de 3 à 10 % en poids.

18. Chocolat stable à la chaleur selon l'une quelconque des revendications 1 à 17, ladite phase grasse comprenant des huiles ayant un point de fusion inférieur à 25 degrés Celsius en une quantité de 1,0 à 42 % en poids, par exemple de 3,0 à 35 % en poids, par exemple de 3,5 à 27 % ou par exemple de 5 à 20 % en poids.

19. Procédé de production d'un chocolat stable à la chaleur, ledit procédé comprenant les étapes consistant à :
a) fournir une composition de chocolat comprenant une phase grasse, ladite phase grasse comprenant
de 60,0 à 99,9 % en poids de triglycérides,
de 40,0 à 95,0 % en poids de triglycérides ayant des acides gras saturés en C16 à C24 aux positions *sn-1* et *sn-3* du triglycéride et de l'acide oléique à la position *sn-2* du triglycéride,
de 0,01 à 5 % en poids d'ester de sorbitane en tant qu'émulsifiant autre que la lécithine, ladite phase grasse comprenant des triglycerides de sources non végétales, les triglycerides de sources non végétales étant choisies dans le groupe constitué par
les triglycérides provenant de sources autres que les huiles végétales natives ou leurs fractions, les triglycérides obtenus après transestérification, et leurs combinaisons,
b) ajuster la température de ladite composition de chocolat à 25 à 39 degrés Celsius,
c) ajouter de 0,1 à 15 % en poids de ladite phase grasse de germe cristallin pendant l'agitation pour produire une composition de chocolat germé,
ledit germe cristallin comprenant des SatOSat-triglycérides en une quantité de 40 à 99,9 %, Sat représentant un acide gras saturé et O représentant l'acide oléique,
une position de pic de fusion endothermique dudit germe cristallin étant d'environ 40 degrés Celsius ou plus lorsqu'elle est mesurée par calorimétrie différentielle à balayage en chauffant des échantillons de 40 +/- 4 mg de germe cristallin de 30 degrés Celsius à 65 degrés Celsius à une vitesse de 3 degrés Celsius par minute pour produire un thermogramme de fusion définissant ladite position de pic de fusion endothermique, et
d) traiter ladite composition de chocolat ensemencé pour obtenir ledit chocolat stable à la chaleur.

20. Procédé de production d'un chocolat stable à la chaleur selon la revendication 19, ladite composition de chocolat étant fondue avant l'étape b).

21. Procédé de production d'un chocolat stable à la chaleur selon la revendication 19 ou 20, ladite composition de chocolat étant une composition de chocolat tempéré.

22. Procédé selon l'une quelconque des revendications 19 à 21, ledit procédé comprenant une étape de tempérage.

23. Utilisation du chocolat stable à la chaleur selon l'une quelconque des revendications 1 à 18 ou du chocolat stable à la chaleur pouvant être obtenu par le procédé selon l'une quelconque des revendications 19 à 22 pour des applications de moulage, de revêtement, d'enrobage ou de remplissage.
